# EUROPEAN PATENT APPLICATION

(11) **EP 4 832 586 A1**
(43) Date of publication of application: **28.10.2026**
(21) Application number: 24918285.8
(22) Date of filing: 13.12.2024
(51) Int. Cl.: H04W 48/04

(54) **COMMUNICATION METHOD AND APPARATUS**

(30) Priority: 15.01.2024 CN 202410055120
(71) Applicant: Huawei Technologies Co., Ltd., Shenzhen, Guangdong 518129 (CN)
(72) Inventor: LI, Guanglei, Shenzhen, Guangdong 518129 (CN); LIAO, Ting, Shenzhen, Guangdong 518129 (CN); ZONG, Zaifeng, Shenzhen, Guangdong 518129 (CN)
(74) Representative: Grünecker Patent- und Rechtsanwälte PartG mbB
(86) International application number: PCT/CN2024/139378
(87) International publication number: WO 2025/152677

(57) **Abstract**

This application provides a communication method and apparatus, and relates to the field of communication technologies. In the method, a first mobility management network element or an access network element may obtain a location of a terminal, and directly perform terminal location check based on the location of the terminal. This provides a method applicable to terminal location check performed by various terminals like an IoT device, and can indicate a cell identity to the first mobility management network element or a second mobility management network element in time based on a terminal location check result, thereby improving network access efficiency of the terminal.

## Description

### CROSS-REFERENCE TO RELATED APPLICATIONS

This application claims priority to Chinese Patent Application No. 202410055120.5, filed with the China National Intellectual Property Administration on January 15, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

The 3rd generation partnership project (3rd generation partnership project, 3GPP) proposes that a location service (location service, LCS) may be used to perform terminal location verification (which may also referred to as compliance verification on a location of a terminal, or verification or check on a location of a terminal), to determine whether the location of the terminal is within a service range of a public land mobile network (public land mobile network, PLMN) currently serving the terminal. However, in a satellite communication scenario, there is no corresponding solution for how to perform terminal location verification.

### SUMMARY

Embodiments of this application provide a communication method and apparatus, to provide a terminal location verification solution.

According to a first aspect, an embodiment of this application provides a communication method. The method may be performed by a first communication apparatus. For example, the first communication apparatus may be a first mobility management network element or a software or hardware module (such as a chip) in the first mobility management network element, or may be an access network element or a software module or hardware module (such as a chip) in the access network element. This is not limited in this application. For ease of description, an example in which the first communication apparatus performs the communication method is used for description. The method includes: receiving first information from a second communication apparatus, where the first information indicates a location of a terminal; and when the location of the terminal is within a service range allowed by a first public land mobile network (which may be considered that terminal location verification is compliant or succeeds), sending a cell identity corresponding to the location to the first mobility management apparatus; or when the location of the terminal is not within a service range allowed by a first public land mobile network (which may be considered that terminal location verification is not compliant or fails), sending a cell identity corresponding to the location to a second mobility management apparatus.

The first communication apparatus is the first mobility management network element, and the second communication apparatus is the terminal. In this case, optionally, the first information is carried in a non-access stratum message. The first communication apparatus is the access network element, and the second communication apparatus is the mobility management network element. In this case, optionally, the first information is carried in an N2 interface message or an S1 interface message. The first mobility management network element may be understood as a mobility management network element that is in the first public land mobile network and that is configured to provide a service for the terminal. The second mobility management network element may be understood as a mobility management network element that is in a second public land mobile network and that is configured to provide a service for the terminal. A service range allowed by a public land mobile network may also be referred to as a service range of a public land mobile network, an operation range allowed by a public land mobile network, an operation range of a public land mobile network, a signal coverage range of a public land mobile network, or the like. A service range not allowed by a public land mobile network may also be referred to as a service range beyond a public land mobile network, an operation range not allowed by a public land mobile network, a signal coverage range beyond (or outside) a public land mobile network, or the like. This is not specifically limited. The cell identity indicates an identifier of a cell corresponding to the location of the terminal, and the cell identity may be an identifier corresponding to a physical cell or an identifier corresponding to a logical cell. This is not limited herein. In addition, with continuous evolution of standards, the mobility management network element, the access network element, the public land mobile network, or the like may have another name. This is not specifically limited herein.

In this embodiment of this application, the first mobility management network element may obtain the location of the terminal from the terminal, and adaptively send the cell identity to the first mobility management network element or the second mobility management network element based on a terminal location verification compliance status, thereby providing a terminal location verification manner. In addition, the cell identity may be fed back to the mobility management network element in time, so that the mobility management network element can register or serve the terminal in time based on the cell identity, thereby helping improve efficiency of registering with the terminal or serving the terminal, and also correct in time a terminal that is not compliant in location verification to register with a compliant network. Optionally, the first mobility management network element may obtain the location of the terminal by using a non-access stratum message, or the access network element may obtain the location of the terminal from the first mobility management network element. Encryption reliability of the non-access stratum message is high, and therefore security of the location of the terminal can be improved.

In a possible implementation, the method further includes: determining whether the location of the terminal is within the service range allowed by the first public land mobile network. It may alternatively be described as determining that the location of the terminal is within the service range allowed by the first public land mobile network, or is not within the service range allowed by the first public land mobile network (or may be described as exceeding the service range allowed by the first public land mobile network).

In a possible implementation, the first information further indicates that the location of the terminal is not within the service range allowed by the first public land mobile network, or the location of the terminal is within the service range allowed by the first public land mobile network.

When the first communication apparatus determines whether the location of the terminal is within the service range allowed by the first public land mobile network, the first information does not need to indicate that the location of the terminal is not within or is within the service range allowed by the first public land mobile network. Alternatively, when the first information indicates that the location of the terminal is not within or is within the service range allowed by the first public land mobile network, the first communication apparatus may not need to determine whether the location of the terminal is within the service range allowed by the first public land mobile network. Alternatively, when the first information indicates that the location of the terminal is not within or is within the service range allowed by the first public land mobile network, the first communication apparatus may determine whether the location of the terminal is within the service range allowed by the first public land mobile network. In this way, it is equivalent to verifying twice whether the location of the terminal is within the service range allowed by the first public land mobile network, thereby facilitating reliability of a location verification result of the terminal.

In this way, the first communication apparatus may not need to determine whether the location of the terminal is within the service range allowed by the first public land mobile network, thereby reducing a processing amount of the first communication apparatus. In addition, the first information may indicate the location of the terminal and whether the location of the terminal is within the service range allowed by the first public land mobile network, so that a quantity of interactions between the first communication apparatus and the second communication apparatus can be reduced.

In a possible implementation, when the location of the terminal is not within the service range allowed by the first public land mobile network, the method further includes: sending second information to the terminal, where the second information indicates that the terminal is not within the service range allowed by the first public land mobile network; and/or sending third information to the terminal, where the third information indicates one of the following: the terminal to enter an idle state; or the terminal to enter an inactive state.

If the first communication apparatus is the first mobility management network element, the first communication apparatus may send the second information and/or the third information to the terminal through the access network element.

In this way, when terminal location verification is not compliant, the terminal may be notified in time that the terminal location verification is not compliant, and/or the terminal is controlled to enter the idle state or the inactive state, so as to save power of the terminal, and avoid wasting resources because the terminal attempts to perform invalid communication with the first mobility management network element.

In a possible implementation, the location of the terminal is a global navigation satellite system (global navigation satellite system, GNSS) location. In this way, this implementation is applicable to terminal location check performed on the terminal like an IoT device, making this implementation more applicable.

According to a second aspect, an embodiment of this application provides a communication method. The method may be performed by a first mobility management network element or a software or hardware module (such as a chip) in the first mobility management network element. This is not limited in this application. For ease of description, an example in which the first mobility management network element performs the communication method is used for description. The method includes: receiving fourth information from a terminal, where the fourth information indicates a location of the terminal; and sending first information to an access network element, where the first information indicates the location of the terminal.

In a possible implementation, before sending the first information to the access network element, the method further includes: determining that a first condition is met, where the first condition includes at least one of the following: determining that a type of the terminal is a first type; determining that an access type used by the terminal is satellite access; determining that the access network element supports terminal location verification; or deploying the access network element on a first satellite.

In a possible implementation, the location of the terminal is a GNSS location of the terminal.

According to a third aspect, an embodiment of this application provides a communication method. The method may be performed by a location regulation proxy network element or a software or hardware module (such as a chip) in the location regulation proxy network element. This is not limited in this application. With continuous evolution of standards, the location regulation proxy network element may have another name. This is not specifically limited herein. For ease of description, an example in which the location regulation proxy network element performs the communication method is used for description. The method includes: receiving first information from a terminal, where the first information is used to request to register or serve the terminal; and if the terminal is within a service range allowed by a first public land mobile network, sending second information to a first mobility management network element, where the second information requests to register or serve the terminal; or if the terminal is not within a service range allowed by a first public land mobile network, sending third information to the terminal, where the third information indicates that the registration or the service is rejected.

The first public land mobile network currently serves the terminal, and the first mobility management network element belongs to the first public land mobile network. The location regulation proxy network element may be deployed on a first satellite. The first satellite is, for example, a satellite that currently serves the terminal, or a satellite that provides a service for the terminal next time. This is not specifically limited herein. The satellite that provides the service for the terminal next time may be understood as a satellite that provides a service for the terminal in the future, for example, may be a satellite that serves the terminal in a first time period, or may be a satellite that serves the terminal when the terminal is at a next location. A start moment (or a starting moment) of the first time period may be a current moment.

In this embodiment of this application, the location regulation network element deployed on the first satellite may perform terminal location verification without using a core network element, so that the terminal location verification can still be performed when a feeder link corresponding to the terminal is abnormal.

In a possible implementation, the method further includes: receiving fourth information from the first mobility management network element, where the fourth information is used to trigger the location regulation proxy network element to perform terminal location verification, and the first mobility management network element belongs to the first public land mobile network and currently serves the terminal.

In this way, the location regulation proxy network element is equivalent to performing the terminal location verification based on authorization or triggering of the first mobility management network element, so that the location regulation proxy network element or the first mobility management network element can perform the terminal location verification based on a specific situation, thereby improving flexibility of the terminal location verification.

In a possible implementation, the fourth information includes an identifier of the terminal; or the fourth information includes an identifier of the terminal and an identifier of the first public land mobile network.

In this way, the location regulation proxy determines, based on the fourth information, a terminal that performs terminal location verification, and a public land mobile network that currently serves the terminal, so as to facilitate the terminal location verification.

In a possible implementation, the method further includes: receiving fifth information from an access network element, where the fifth information indicates a first location of the terminal; and determining, based on the fifth information, that the terminal is located in a preset area.

The preset area is, for example, a border area of a country or a border area of a province. This is not limited herein. The preset area may be prestored, preconfigured, or predefined in the location regulation proxy network element.

In this way, the location regulation proxy network element may determine that the terminal is located in the preset area, and perform the terminal location verification, so as to avoid performing the terminal location verifications a plurality of times, thereby reducing unnecessary terminal location verifications, and reducing a processing amount of the location regulation proxy network element as much as possible while ensuring terminal location compliance.

In a possible implementation, the method further includes: sending sixth information to the access network element, where the sixth information further indicates one of the following: to delete (or release) context information of the terminal; the terminal to enter an inactive state; or the terminal to enter an idle state.

In a possible implementation, the method further includes: sending seventh information to a first location network element, where the seventh information is used to request a location of the terminal, and the first location network element is deployed on the first satellite; receiving eighth information from the first location network element, where the eighth information indicates a second location of the terminal; and determining, based on the second location, whether the terminal is within the service range allowed by the first public land mobile network.

In this way, the location regulation proxy network element may directly obtain the second location of the terminal based on the first location network element on the first satellite, and perform the terminal location verification based on the second location, thereby providing a manner of obtaining the location of the terminal. In addition, determining the second location does not need to rely on a core network element, thereby reducing interactions between the location regulation proxy network element and the core network element.

In a possible implementation, the method further includes: receiving ninth information from the access network element, where the ninth information indicates a third location of the terminal; and determining, based on the third location, whether the terminal is within the service range allowed by the first public land mobile network.

In this way, the location regulation proxy network element obtains the third location of the terminal from the access network element, and performs the terminal location verification based on the third location, thereby providing a manner of obtaining the location of the terminal. In addition, determining the second location does not need to rely on a core network element, thereby reducing interactions between the location regulation proxy network element and the core network element.

In a possible implementation, the method further includes: receiving key information from the first mobility management network element; and decrypting the ninth information based on the key information, to obtain the third location of the terminal.

In this way, the ninth information may carry the encrypted third location, and security of the third location can be further ensured while ensuring that the location regulation proxy network element obtains the third location of the terminal.

In a possible implementation, the method further includes: when the terminal is within the service range allowed by the first public land mobile network, sending a cell identity corresponding to the third location to the first mobility management network element.

In a possible implementation, the second location or the third location is a GNSS location of the terminal.

In a possible implementation, the method further includes: receiving tenth information, where the tenth information is used to trigger stopping of the terminal location verification; and stopping the terminal location verification based on the tenth information. Optionally, the tenth information may carry the identifier of the terminal, so as to determine to stop the terminal location verification. The tenth information may be received from the first mobility management network element.

In this way, the location regulation proxy network element may stop the terminal location verification, so that the location regulation proxy network element can flexibly perform the terminal location verification or not perform the terminal location verification.

According to a fourth aspect, an embodiment of this application provides a communication method. The method may be performed by a first mobility management network element or a software or hardware module (such as a chip) in the first mobility management network element. This is not limited in this application. For ease of description, an example in which the location regulation proxy network element performs the communication method is used for description. The method includes: determining to provide a store-and-forward service for a terminal, where the terminal supports a store-and-forward function, or the terminal has subscribed to the store-and-forward service; and sending fourth information to a location regulation proxy network element, where the fourth information is used to trigger the location regulation proxy network element to perform terminal location verification, and the location regulation proxy network element is deployed on a first satellite.

In a possible implementation, the method further includes: receiving second information from the location regulation proxy network element, where the second information requests to register or serve the terminal.

In a possible implementation, the method further includes: receiving eleventh information from the terminal, where the eleventh information triggers deregistration of the terminal or release of a session corresponding to the terminal; and sending tenth information to the location regulation proxy network element based on the eleventh information, where the tenth information is used to trigger stopping of the terminal location verification.

In a possible implementation, the first satellite is a current serving satellite of the terminal; or the first satellite is a satellite that provides a service for the terminal next time.

In a possible implementation, the method further includes: sending key information of the terminal to the location regulation proxy network element.

According to a fifth aspect, an embodiment of this application provides a communication method. The method may be performed by an access network element or a software or hardware module (such as a chip) in the access network element. This is not limited in this application. For ease of description, an example in which the access network element performs the communication method is used for description. The method includes: receiving sixth information from a location regulation proxy network element, where the sixth information indicates one of the following: to delete context information of a terminal; the terminal to enter an inactive state; or the terminal to enter an idle state, and the location regulation proxy network element is deployed on a first satellite; and based on the sixth information, deleting the context information of the terminal, indicating the terminal to enter the inactive state, or indicating the terminal to enter the idle state.

In a possible implementation, the method further includes: receiving first information from the terminal, where the first information is used to request to register or serve the terminal; and sending the first information to the location regulation proxy network element.

In a possible implementation, the method further includes: sending ninth information to the location regulation proxy network element, where the fifth information indicates a third location of the terminal.

According to a sixth aspect, an embodiment of this application provides a communication method. The method may be performed by an access network element or a software or hardware module (such as a chip) in the access network element. This is not limited in this application. For ease of description, an example in which the access network element performs the communication method is used for description. The method includes: receiving first information from a location regulation proxy network element, where the first information indicates a location of a terminal, and the location regulation proxy network element is deployed on a first satellite; and if the terminal is within a service range of a first public land mobile network, sending second information to a first mobility management apparatus based on the first information, where the second information indicates a cell identity, and the first mobility management apparatus belongs to the first public land mobile network and currently serves the terminal; or if the terminal is not within a service range of a first public land mobile network, sending third information to the terminal, where the third information indicates that registration or a service of the terminal is rejected, where the first public land mobile network currently serves the terminal.

In this embodiment of this application, the access network element deployed on the first satellite may perform terminal location verification without using a core network element, so that the terminal location verification can still be performed when a feeder link corresponding to the terminal is abnormal.

In a possible implementation, the method further includes: receiving fourth information from the terminal, where the fourth information carries the location of the terminal; and sending fifth information to the location regulation proxy network element based on the fourth information, where the fifth information indicates the location of the terminal.

In a possible implementation, the method further includes: determining whether the location of the terminal is within the service range of the first public land mobile network; or receiving sixth information from the location regulation proxy network element, where the sixth information indicates that the location of the terminal is within the service range of the first public land mobile network, or is not within the service range of the first public land mobile network.

In a possible implementation, the method further includes: sending seventh information to the terminal, where the seventh information indicates that the terminal is not within the service range allowed by the first public land mobile network.

In a possible implementation, the method further includes: sending eighth information to the terminal, where the eighth information indicates one of the following: the terminal to enter an inactive state; or the terminal to enter an idle state.

In a possible implementation, the first satellite is a current serving satellite of the terminal; or the first satellite is a satellite that provides a service for the terminal next time.

In a possible implementation, the location of the terminal is a global navigation satellite system GNSS location of the terminal.

According to a seventh aspect, an embodiment of this application provides a communication method. The method may be performed by a location regulation proxy network element or a software or hardware module (such as a chip) in the location regulation proxy network element. This is not limited in this application. For ease of description, an example in which the location regulation proxy network element performs the communication method is used for description. The method includes: receiving fifth information from an access network element, where the fifth information carries a location of a terminal, and the access network element is deployed on the first satellite; receiving key information of the terminal from a first mobility management network element; decrypting the fifth information based on the key information, to obtain the location of the terminal; and sending first information to the access network element, where the first information indicates the location of the terminal.

In a possible implementation, the first satellite is a current serving satellite of the terminal; or the first satellite is a satellite that provides a service for the terminal next time.

In a possible implementation, the fifth information is carried in a non-access stratum message.

In a possible implementation, the location of the terminal is a GNSS location of the terminal.

According to an eighth aspect, an embodiment of this application provides a communication method. The method may be performed by a first mobility management network element or a software or hardware module (such as a chip) in the first mobility management network element. This is not limited in this application. For ease of description, an example in which the first mobility management network element performs the communication method is used for description. The method includes: obtaining key information of a terminal; and sending the key information of the terminal to a location regulation proxy network element, where the location regulation proxy network element is deployed on a first satellite.

In a possible implementation, the first satellite is a current serving satellite of the terminal; or the first satellite is a satellite that provides a service for the terminal next time.

In a possible implementation, the method further includes: determining to provide a store-and-forward service for the terminal, and receiving ninth information from the terminal, where the ninth information indicates that the terminal supports a store-and-forward function; or receiving tenth information from a unified data management function, where the tenth information indicates that the terminal has subscribed to a store-and-forward service.

In a possible implementation, the method further includes: sending eleventh information to the location regulation proxy network element, where the eleventh information is used to trigger the location regulation proxy network element to perform the terminal location verification.

According to a ninth aspect, an embodiment of this application provides a communication method. The method may be performed by a terminal or a software or hardware module (such as a chip) in the terminal. This is not limited in this application. For ease of description, an example in which the terminal performs the communication method is used for description. The method includes: sending ninth information to a first mobility management network element, where the ninth information indicates that the terminal supports a store-and-forward function; and sending fourth information to an access network element, where the fourth information carries a location of the terminal.

In a possible implementation, the method further includes: receiving third information from the access network element, where the third information indicates that registration or a service of the terminal is rejected.

In a possible implementation, the method further includes: receiving seventh information from the access network element, where the seventh information indicates that the terminal is not within a service range allowed by a first public land mobile network.

In a possible implementation, the method further includes: receiving eighth information from the access network element, where the eighth information indicates one of the following: the terminal to enter an inactive state; or the terminal to enter an idle state.

In a possible implementation, the location of the terminal is a GNSS location of the terminal.

According to a tenth aspect, an embodiment of this application provides a communication apparatus. The communication apparatus may be the first communication apparatus in the first aspect, or a software or hardware module (such as a chip or a chip system) configured in the first communication apparatus, or an apparatus having a function of the first communication apparatus in the first aspect. The communication apparatus includes a corresponding means (means) or module configured to perform the first aspect or any possible implementation. For example, the communication apparatus includes a transceiver module. Optionally, the communication apparatus further includes a processing module (also referred to as a processing unit sometimes).

For example, the transceiver module is configured to: receive first information from a second communication apparatus; and when a location of a terminal is within a service range allowed by a first public land mobile network, send a cell identity corresponding to the location to a first mobility management apparatus; or when a location of a terminal is not within a service range allowed by a first public land mobile network, send a cell identity corresponding to the location to a second mobility management apparatus.

The communication apparatus may further perform the method in any possible implementation of the first aspect, and details are not described herein again.

According to an eleventh aspect, an embodiment of this application provides a communication apparatus. The communication apparatus may be the first mobility management network element in the second aspect, or a software or hardware module (such as a chip or a chip system) configured in the first mobility management network element, or an apparatus having a function of the first mobility management network element in the second aspect. The communication apparatus includes a corresponding means (means) or module configured to perform the second aspect or any possible implementation. For example, the communication apparatus includes a transceiver module. Optionally, the communication apparatus further includes a processing module (also referred to as a processing unit sometimes).

For example, the transceiver module is configured to: receive third information from a terminal, where the third information indicates a location of the terminal; and send first information to an access network element, where the first information indicates the location of the terminal.

The communication apparatus may further perform the method in any possible implementation of the second aspect, and details are not described herein again.

According to a twelfth aspect, an embodiment of this application provides a communication apparatus. The communication apparatus may be the location regulation proxy network element in the third aspect, or a software or hardware module (such as a chip or a chip system) configured in the location regulation proxy network element, or an apparatus having a function of the location regulation proxy network element in the third aspect. The communication apparatus includes a corresponding means (means) or module configured to perform the third aspect or any possible implementation. For example, the communication apparatus includes a transceiver module. Optionally, the communication apparatus further includes a processing module (also referred to as a processing unit sometimes).

For example, the transceiver module is configured to: receive first information from a terminal, where the first information is used to request to register or serve the terminal; and if the terminal is within a service range allowed by a first public land mobile network, send second information to a first mobility management network element, where the second information requests to register or serve the terminal; or if the terminal is not within a service range allowed by a first public land mobile network, send third information to the terminal, where the third information indicates that the registration or the service is rejected.

The communication apparatus may further perform the method in any possible implementation of the third aspect, and details are not described herein again.

According to a thirteenth aspect, an embodiment of this application provides a communication apparatus. The communication apparatus may be the first mobility management network element in the fourth aspect, or a software or hardware module (such as a chip or a chip system) configured in the first mobility management network element, or an apparatus having a function of the first mobility management network element in the fourth aspect. The communication apparatus includes a corresponding means (means) or module configured to perform the fourth aspect or any possible implementation. For example, the communication apparatus includes a transceiver module and a processing module (also referred to as a processing unit sometimes).

For example, the processing module is configured to determine to provide a store-and-forward service for a terminal, where the terminal supports a store-and-forward function, or the terminal has subscribed to the store-and-forward service; and the transceiver module is configured to send fourth information to a location regulation proxy network element, where the fourth information is used to trigger the location regulation proxy network element to perform terminal location verification, and the location regulation proxy network element is deployed on a first satellite.

The communication apparatus may further perform the method in any possible implementation of the fourth aspect, and details are not described herein again.

According to a fourteenth aspect, an embodiment of this application provides a communication apparatus. The communication apparatus may be the access network element in the fifth aspect, or a software or hardware module (such as a chip or a chip system) configured in the access network element, or an apparatus having a function of the access network element in the fifth aspect. The communication apparatus includes a corresponding means (means) or module configured to perform the fifth aspect or any possible implementation. For example, the communication apparatus includes a transceiver module and a processing module (also referred to as a processing unit sometimes).

The transceiver module is configured to receive sixth information from a location regulation proxy network element, where the sixth information indicates one of the following: to delete context information of a terminal; the terminal to enter an inactive state; or the terminal to enter an idle state, and the location regulation proxy network element is deployed on a first satellite; and the processing module is configured to: based on the sixth information, delete the context information of the terminal, or the transceiver module is configured to indicate the terminal to enter the inactive state, or indicate the terminal to enter the idle state.

The communication apparatus may further perform the method in any possible implementation of the fifth aspect, and details are not described herein again.

According to a fifteenth aspect, an embodiment of this application provides a communication apparatus. The communication apparatus may be the access network element in the sixth aspect, or a software or hardware module (such as a chip or a chip system) configured in the access network element, or an apparatus having a function of the access network element in the sixth aspect. The communication apparatus includes a corresponding means (means) or module configured to perform the sixth aspect or any possible implementation. For example, the communication apparatus includes a transceiver module. Optionally, the communication apparatus further includes a processing module (also referred to as a processing unit sometimes).

The transceiver module is configured to: receive first information from a location regulation proxy network element, where the first information indicates a location of a terminal, and the location regulation proxy network element is deployed on a first satellite; and if the terminal is within a service range of a first public land mobile network, send second information to a first mobility management apparatus based on the first information; or if the terminal is not within a service range of a first public land mobile network, send third information to the terminal.

The communication apparatus may further perform the method in any possible implementation of the sixth aspect, and details are not described herein again.

According to a sixteenth aspect, an embodiment of this application provides a communication apparatus. The communication apparatus may be the location regulation proxy network element in the seventh aspect, or a software or hardware module (such as a chip or a chip system) configured in the location regulation proxy network element, or an apparatus having a function of the location regulation proxy network element in the seventh aspect. The communication apparatus includes a corresponding means (means) or module configured to perform the seventh aspect or any possible implementation. For example, the communication apparatus includes a transceiver module. Optionally, the communication apparatus further includes a processing module (also referred to as a processing unit sometimes).

The transceiver module is configured to: receive key information of a terminal from a first mobility management network element; decrypt fifth information based on the key information, to obtain a location of the terminal; and send first information to an access network element, where the first information indicates the location of the terminal.

The communication apparatus may further perform the method in any possible implementation of the seventh aspect, and details are not described herein again.

According to a seventeenth aspect, an embodiment of this application provides a communication apparatus. The communication apparatus may be the first mobility management network element in the eighth aspect, or a software or hardware module (such as a chip or a chip system) configured in the first mobility management network element, or an apparatus having a function of the first mobility management network element in the eighth aspect. The communication apparatus includes a corresponding means (means) or module configured to perform the eighth aspect or any possible implementation. For example, the communication apparatus includes a transceiver module. Optionally, the communication apparatus further includes a processing module (also referred to as a processing unit sometimes).

The transceiver module is configured to: obtain key information of a terminal; and send the key information of the terminal to a location regulation proxy network element, where the location regulation proxy network element is deployed on a first satellite.

The communication apparatus may further perform the method in any possible implementation of the eighth aspect, and details are not described herein again.

According to an eighteenth aspect, an embodiment of this application provides a communication apparatus. The communication apparatus may be the terminal in the ninth aspect, or a software or hardware module (such as a chip or a chip system) configured in the terminal, or an apparatus having a function of the terminal in the ninth aspect. The communication apparatus includes a corresponding means (means) or module configured to perform the ninth aspect or any possible implementation. For example, the communication apparatus includes a transceiver module. Optionally, the communication apparatus further includes a processing module (also referred to as a processing unit sometimes).

The transceiver module is configured to: send ninth information to a first mobility management network element, where the ninth information indicates that the terminal supports a store-and-forward function; and send fourth information to an access network element, where the fourth information carries a location of the terminal.

The communication apparatus may further perform the method in any possible implementation of the ninth aspect, and details are not described herein again.

According to a nineteenth aspect, an embodiment of this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect to the ninth aspect by using a logic circuit or by executing code instructions.

In a specific implementation process, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, that is, a computer device supporting a wireless communication function. Specifically, the wireless communication device may be a terminal device such as a smartphone, or may be a network device such as a radio access network device (such as a base station).

In another implementation, the communication apparatus may be a part of devices in the wireless communication device, for example, an integrated circuit product such as a system chip or a communication chip. The system chip may also be referred to as a system on chip (system on chip, SoC), or briefly referred to as a SoC chip. The communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In physical implementation, some or all chips in the communication chip may be integrated into the SoC chip. For example, the baseband processing chip is integrated into the SoC chip, but the radio frequency processing chip is not integrated into the SoC chip. The interface circuit may be a radio frequency processing chip in the wireless communication device, and the processor may be a baseband processing chip in the wireless communication device. The interface circuit may be an input/output interface, an interface circuit, an output circuit, an input circuit, a pin, a related circuit, or the like on the chip or a chip system. The processor may alternatively be embodied as a processing circuit or a logic circuit.

In still another implementation, the communication apparatus may be a chip system. The chip system may include a chip, or may include a chip and another discrete device. The chip system may include, for example, a field programmable gate array (field programmable gate array, FPGA), an application-specific integrated circuit (application-specific integrated circuit, ASIC), a system on chip (system on chip, SoC), a CPU, a network processor (network processor, NP), a DSP, a micro controller unit (micro controller unit, MCU), a programmable logic device (programmable logic device, PLD), or another integrated chip.

According to a twentieth aspect, an embodiment of this application provides a communication apparatus. The communication apparatus includes a processor. When the communication apparatus runs, the processor performs the method according to any one of the first aspect to the ninth aspect. Optionally, the communication apparatus further includes a memory. The memory stores one or more computer programs, and the processor may execute the one or more computer programs to implement the method according to any one of the first aspect to the ninth aspect.

Optionally, the communication apparatus further includes other components, for example, an antenna, an input/output module, and an interface (such as a communication interface). These components may be hardware, software, or a combination of software and hardware.

According to a twenty-first aspect, an embodiment of this application provides a communication system. The communication system may implement the method according to any one of the first aspect to the ninth aspect.

In a possible embodiment, the communication system includes the communication apparatus according to the tenth aspect and the communication apparatus according to the eleventh aspect.

In another possible embodiment, the communication system includes the communication apparatus according to the twelfth aspect, the communication apparatus according to the thirteenth aspect, and the communication apparatus according to the fourteenth aspect.

In still another possible embodiment, the communication system includes the communication apparatus according to the fifteenth aspect, the communication apparatus according to the sixteenth aspect, the communication apparatus according to the seventeenth aspect, and the communication apparatus according to the eighteenth aspect.

According to a twenty-second aspect, an embodiment of this application provides a chip system. The chip system includes a processor. Optionally, the chip system may further include an interface (such as a communication interface). The processor may be configured to implement the method according to any one of the first aspect to the ninth aspect. Optionally, the chip system further includes a memory. The memory is configured to store a computer program (which may also be referred to as code or instructions). The processor is configured to invoke the computer program from the memory and run the computer program, so that a device on which a chip system is installed performs the method according to any one of the first aspect to the ninth aspect. For an implementation of the chip system, refer to the foregoing content of the chip system. Details are not described herein again.

According to a twenty-third aspect, an embodiment of this application provides a computer-readable storage medium. The computer-readable storage medium is configured to store a computer program or instructions. When the computer program or the instructions are run, the method according to any one of the first aspect to the ninth aspect is implemented.

According to a twenty-fourth aspect, an embodiment of this application provides a computer program product. When the computer program product runs on a computer, the method according to any one of the first aspect to the ninth aspect is implemented.

In a possible implementation, the computer program product includes a computer program, and when the computer program runs on a computer, the computer is enabled to perform the method according to any one of the first aspect to the ninth aspect.

In another possible implementation, the computer program product includes instructions, and when the instructions are run on a computer, the computer is enabled to perform the method according to any one of the first aspect to the ninth aspect.

For beneficial effects of any one of the technical solutions in the second aspect, the fourth aspect, the fifth aspect, and the seventh aspect to the twenty-fourth aspect, refer to the beneficial effects of the corresponding technical solutions in the first aspect, the third aspect, or the sixth aspect. Details are not described herein again.

### BRIEF DESCRIPTION OF DRAWINGS

FIG. 1 is a diagram of an architecture of a communication system to which an embodiment of this application is applicable;
FIG. 2 is a diagram of an architecture of a communication system to which an embodiment of this application is applicable;
FIG. 3 is a diagram of performing terminal location verification;
FIG. 4 is a diagram of a scenario of discontinuous coverage;
FIG. 5 is a diagram of an architecture of a communication system according to an embodiment of this application;
FIG. 6 to FIG. 13 are diagrams of six communication methods according to embodiments of this application; and
FIG. 14 to FIG. 16 are diagrams of structures of three communication apparatuses according to embodiments of this application.

### DESCRIPTION OF EMBODIMENTS

To make objectives, technical solutions, and advantages of embodiments of this application clearer, the following further describes embodiments of this application in detail with reference to the accompanying drawings.

For ease of understanding, the following describes some technical terms in embodiments of this application. These interpretations and descriptions are intended to facilitate understanding of embodiments of this application, but should not be construed as a limitation on the protection scope claimed in embodiments of this application.
1. A cell (cell) may be understood as an area that can provide a wireless communication service for a terminal device, and is a composition unit of a communication network. Alternatively, a cell may be considered as a division unit of a communication coverage range. One access network element (for example, one base station) may correspond to one or more cells, or the one or more cells may be considered as one or more cells of the access network element. Optionally, the cell is a cell managed by the access network element. For example, the access network element is a base station, and one base station may manage one cell, or may manage a plurality of cells. For example, the cell is a coverage area centered on the base station. For example, when one base station manages a plurality of cells, the base station may have antennas in a plurality of directions. One antenna is used to cover a specific geographical area in a corresponding direction, and the geographical area is referred to as a sector. One sector uses one or more wireless carrier frequencies to complete wireless coverage. One wireless carrier frequency uses one carrier frequency. The sector and the carrier frequency constitute a smallest service unit that provides access for the terminal device, that is, a cell.

One physical cell may be divided into one or more logical cells, or a plurality of physical cells may constitute one logical cell, or logical cells may be in one-to-one correspondence with geographical areas. For example, a network operator may obtain a plurality of geographical areas through division, and each geographical area in the plurality of geographical areas corresponds to one logical cell. In this case, the logical cell is irrelevant to the physical cell. For example, a geographical area A corresponds to a logical cell 1. When a satellite moves over the geographical area A, in the geographical area A, a device that is accessed via the satellite may be considered to be accessed from the corresponding logical cell 1.

Either a logical cell or a physical cell may be represented by a cell identity (cell identity, cell ID), and an identifier of a physical cell is, for example, a physical cell identifier (physical cell identifier, PCI). The cell identity in embodiments of this application may be an identifier of a physical cell or an identifier of a logical cell. This is not limited herein.

2. An identifier (identifier, ID) of a PLMN, which may also be referred to as a PLMN identifier, indicates the PLMN. The identifier of the PLMN may include, for example, a mobile country code (mobile country code, MCC) and a mobile network code (mobile network code, MNC). The MCC may be uniformly allocated and managed by the International Telecommunication Union, and is used to uniquely identify a country to which a mobile subscriber belongs. The MCC may be a specific value. The MNC is used to identify a mobile network to which a mobile customer belongs, and may be a 2- or 3-digit number. If there are a plurality of PLMNs in one country, the PLMNs may be distinguished by MNCs. An identifier of a PLMN corresponding to a location of a terminal not only indicates the PLMN, but also reflects the PLMN in which the terminal is currently located, that is, the identifier of the PLMN can indicate the location of the terminal.

3. A location of a terminal may be a specific (or accurate) location of the terminal or a coarse location of the terminal (coarse UE location).

The specific (or accurate) location of the terminal may represent a specific location point of the terminal, or may represent a high-accuracy location of the terminal. The specific location of the terminal is, for example, a location (or coordinates) of the terminal in a coordinate system (for example, a world coordinate system or another coordinate system). When the location of the terminal is the location of the terminal in the world coordinate system, the location of the terminal may be considered as a geographical location of the terminal, specifically including a longitude and a latitude of the terminal, and optionally, a relative altitude of the terminal. The relative altitude of the terminal is, for example, a height of the terminal relative to the ground or the horizon.

The coarse location of the terminal represents, for example, a rough location of the terminal, but may not specify a specific location point of the terminal, or the coarse location of the terminal is uncertain or has low accuracy, for example, which can be guaranteed only within 2 km. The coarse location of the terminal is, for example, a GNSS location of the terminal, and the GNSS location may also be referred to as GNSS coordinates (GNSS coordinates) or an area in which the terminal is located.

The GNSS location includes a longitude and a latitude of the terminal (the longitude and the latitude may be collectively referred to as "longitude and latitude"). Optionally, the GNSS location further includes a relative altitude of the terminal. For example, if the GNSS location of the terminal is (30, 60, 10), it indicates that the terminal is located at a longitude of 30 degrees (°), a latitude of 60 degrees (°), and an altitude of 10 meters (m).

For example, the area in which the terminal is located may be represented in one of the following manner, or the area in which the terminal is located includes one of the following: a PLMN corresponding to the geographical location of the terminal, for example, the location of the terminal is represented as a PLMN 1, which indicates that the geographical location of the terminal corresponds to the PLMN 1; a cell corresponding to the geographical location of the terminal, for example, the location of the terminal is represented as a cell 2, which indicates that the geographical location of the terminal corresponds to the cell 2; an index of a synchronization signal corresponding to the geographical location of the terminal, for example, if a network side delivers synchronization signals with different indexes in different areas, the coarse location corresponding to the terminal may be indicated by indicating the synchronization signal; or a physical area in which the terminal is located, where the physical area herein may be the same as or different from a geographical area used for mapping a logical cell, which is not specifically limited herein. The synchronization signal includes/is replaced with any one or more of the following: a synchronization signal (synchronization signal, SS), a synchronization signal block (synchronization signal block, SSB), or a synchronization signal and PBCH block (synchronization signal block and PBCH block or SS/PBCH block, SSB).

Different network elements or devices may all be capable of obtaining locations of the terminal. However, the locations of the terminal obtained by the different network elements or devices may be a same type of location, for example, a specific location of the terminal or a coarse location of the terminal, but the locations of the terminal obtained by the different network elements or devices may be different. Alternatively, the locations of the terminal obtained by the different network elements may be different types of locations. This is not limited herein. For ease of differentiation, locations of the terminal obtained from different network elements or devices are respectively referred to as a first location of the terminal, a second location of the terminal, a third location of the terminal, or the like below.

Certainly, the location of the terminal may alternatively be represented in another manner. This is not specifically limited in embodiments of this application.
4. An identifier (ID) of a terminal is used to identify the terminal, and the identifier of the terminal is, for example, a permanent identifier and/or a temporary identifier of the terminal. The permanent identifier is, for example, a subscription permanent identifier (subscription permanent identifier, SUPI), a permanent equipment identifier (permanent equipment identifier, PEI), or a generic public subscription identifier (generic public subscription identifier, GPSI). The temporary identifier is, for example, a subscription concealed identifier (subscription concealed identifier, SUCI) or a globally unique temporary identifier (globally unique temporary identity, GUTI).
5. A registration request (registration request) may also be referred to as a registration request message, and is used to request to register a terminal, or request to register a terminal with a network, so that the network can serve the terminal. The registration request may be used to initially register the terminal. In this case, the registration request may also be referred to as an initial registration request (initial registration request). For example, the initial registration request may be initiated after the terminal is powered on. Alternatively, the registration request may be used to request to update the registered terminal. In this case, the registration request may also be referred to as a registration update request. For example, the registration update (update) request may be initiated when the terminal moves from one country to another. Optionally, the registration request may include an identifier of the terminal, for example, an SUPI. Optionally, the registration request may further include network slice selection assistance information (network slice selection assistance information, NSSAI). The NSSAI is used to identify a network slice. For example, a value of the NSSAI of the network slice is 0x01000000.
6. A service request (service request) may also be referred to as a service request message, and is used to request to provide a service for a terminal, for example, to establish a session for the terminal. The session is, for example, a protocol data unit (protocol data unit, PDU) session. Optionally, the service request may include an identifier of the terminal, information about a type of a service requested by the terminal, and/or the like.
7. A PLMN is a communication network that provides a mobile communication service. The PLMN may be managed by a government or an operator approved by the government.
8. A service range allowed by a PLMN may be understood as a service area or an operation area that can be provided by the PLMN, or a signal coverage range of the PLMN, an agreed service area of the PLMN, or the like. The service range allowed by the PLMN may alternatively be described as one of the following: a service area allowed by the PLMN, a service area of the PLMN, a service range of the PLMN, a PLMN, an operation range allowed by the PLMN, an operation range of the PLMN, a signal coverage range of the PLMN, or the like. This is not specifically limited herein.

A first service area may include one or more location areas, and the location area is an area covered by a gateway. That is, the first service area may include an area covered by one or more gateways. The area covered by the gateway may be understood as a local area covered by the gateway, and the local area may be understood as an area that provides an actual service, or a local area that can be theoretically covered.

9. A terminal is within a service range allowed by a PLMN or is not within a service range allowed by a PLMN.

That the terminal is within the service range allowed by the PLMN may alternatively be described as one of the following: a location of the terminal is within the service range allowed by the PLMN; a location of the terminal (or terminal) is within a service range (or service area) of the PLMN; a location of the terminal (or terminal) is within a signal coverage range (or signal coverage area) of the PLMN; a location of the terminal (or terminal) is within an operation range (or operation area) of the PLMN; or a location of the terminal (or terminal) is within an operation range (or operation area) allowed by the PLMN. This is not specifically limited. Similarly, that the terminal is not within the service range allowed by the PLMN may alternatively be described as one of the following: a location of the terminal is not within (or beyond) the service range allowed by the PLMN; a location of the terminal (or terminal) is not within (or beyond) a service range (or service area) of the PLMN; a location of the terminal (or terminal) is not within (or beyond) a signal coverage range (or signal coverage area) of the PLMN; a location of the terminal (or terminal) is not within (or beyond) an operation range (or operation area) of the PLMN; or a location of the terminal (or terminal) is not within (or beyond) an operation range (or operation area) allowed by the PLMN. This is not specifically limited.

That the terminal is within the service range allowed by the PLMN may be that a current location of the terminal actually falls within (or is within) the service range allowed by the PLMN, or may be that a signal coverage range of the terminal overlaps the service range allowed by the PLMN, or may be that an overlapping range between a signal coverage range of the terminal and the service range allowed by the PLMN is greater than or equal to a first preset range, or may be that the terminal can receive a signal sent by a network element in the PLMN, or may be that an overlapping range between a geographical area or a physical area corresponding to a logical cell corresponding to the terminal and the service range allowed by the PLMN is greater than or equal to a second preset range. This is not limited herein.

Similarly, that the terminal is not within the service range allowed by the PLMN may be that a current location of the terminal does not fall within (or is not within) the service range allowed by the PLMN, or may be that an overlapping range between a signal coverage range of the terminal and the service range allowed by the PLMN is less than a first preset range, or may be that the terminal cannot receive a signal sent by a network element in the PLMN, or may be that an overlapping range between a geographical area or a physical area corresponding to a logical cell corresponding to the terminal and the service range allowed by the PLMN is less than a second preset range. This is not limited.

For example, if a service range allowed by a PLMN includes all areas of a country C, and the current location of the terminal is in the country C, it indicates that the terminal is within a service range allowed by the PLMN. That the terminal is not within the service range allowed by the PLMN means that the current location of the terminal is not within the service range allowed by the PLMN. For example, if a service range allowed by a PLMN includes all areas of a country C, and the current location of the terminal is in a country B, it indicates that the terminal is not within the service range allowed by the PLMN.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one item (piece) of the following" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are intended to distinguish between a plurality of objects, but are not intended to limit sizes, content, a sequence, a time sequence, priorities, importance degrees, or the like of the plurality of objects. For example, first information and second information are two pieces of information, but it does not indicate that the two pieces of information are different in content, priorities, or importance.

In embodiments of this application, "when", "as if", and "if" all mean that an apparatus performs corresponding processing in an objective case, are not intended to limit time, do not require the apparatus to necessarily have a determining action during implementation, and do not mean another limitation. Unless otherwise specified, "if" and "as if" are interchangeable, and "when" and "in the case of" are interchangeable. "When" and "if"/"as if" are interchangeable.

In embodiments of this application, an "indication" may include a direct indication, an indirect indication, an explicit indication, and an implicit indication. When a piece of indication information is described as indicating A, it may be understood as that the indication information carries A, directly indicates A, or indirectly indicates A. In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for sending separately; and sending periodicities and/or sending occasions of these pieces of sub-information may be the same or different.

In embodiments of this application, "sending" and "receiving" represent signal transfer directions. For example, "sending information to XX" may be understood as that a target end of the information is the XX, and may include direct sending through an air interface, or include indirect sending through an air interface by another unit or module. "Receiving information from YY" may be understood as that a source end of the information is YY, and may include directly receiving the information from YY through an air interface, or may include indirectly receiving the information from YY from another unit or module through an air interface. "Sending" may alternatively be understood as "outputting" of a chip interface, and "receiving" may alternatively be understood as "inputting" of the chip interface. In other words, sending and receiving may be performed between devices, for example, between the network device and the terminal device, or may be performed in a device, for example, sending or receiving is performed between components, modules, chips, software modules, or hardware modules in a device through a bus, a cable, or an interface.

In embodiments of this application, terms such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a relative concept in a specific manner.

The 3GPP proposes a 5th generation mobile communication system (the 5th generation system, 5GS). The 5GS has capabilities such as high bandwidth, high reliability, and low latency. With development of satellite communication technologies, a communication satellite has a greatly increased bandwidth capacity and reduced costs. Integration of satellite networks and 5G networks is emerging. A powerful coverage capability of the satellite helps the 5G networks cover sparsely populated remote areas and areas that are difficult to reach by terrestrial networks, such as oceans and islands.

The 3GPP proposes that a satellite is used as a radio frequency module of a base station to provide a transparent forwarding capability, that is, a satellite communication system in a transparent mode. In addition, the 3GPP also proposes that the satellite supports data processing, that is, the satellite provides a non-transparent forwarding capability (or referred to as a regenerative capability), that is, a satellite communication system in a regenerative mode.

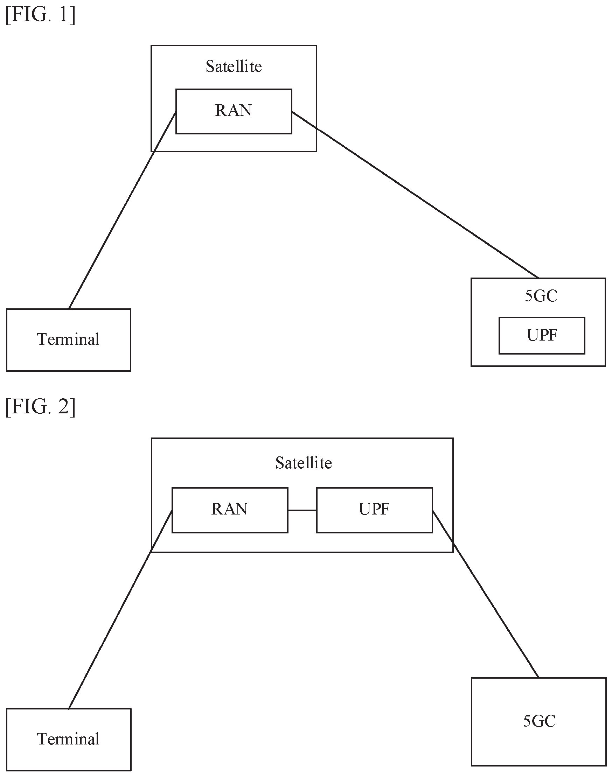

For example, FIG. 1 shows a satellite communication system in a regenerative mode. As shown in FIG. 1, an access network element (for example, a base station) in a radio access network (radio access network, RAN) is deployed on a satellite. A terminal accesses a 5G core network (core network, CN) (which may be abbreviated as 5GC for short) through the RAN. The RAN deployed on the satellite may also be referred to as a space-borne RAN, a space-borne base station, or the like, and has a regenerative capability.

Alternatively, FIG. 2 shows another satellite communication system in a regenerative mode. As shown in FIG. 2, a RAN and a user plane function (user plane function, UPF) network element are deployed on a satellite. The UPF deployed on the satellite may be referred to as a space-borne UPF, and has a user plane data forwarding capability.

The following describes implementation forms of the foregoing devices or network elements by using examples.

The terminal is a device having a wireless transceiver function, and may also be sometimes referred to as user equipment (user equipment, UE), a terminal device, an access station, a UE station, a remote station, a wireless communication device, a user apparatus, or the like. The terminal may be a fixed device, a mobile device, a handheld device, a wearable device, a vehicle-mounted device, or a wireless apparatus (for example, a communication module or a chip system) built in the foregoing device. The terminal is configured to connect persons, objects, machines, and the like, and may be widely used in various scenarios, for example, including but not limited to terminal devices in scenarios such as the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, smart city (smart city), an uncrewed aerial vehicle, and a robot.

The RAN in embodiments of this application may be a 3GPP-related cellular system, for example, a 5G/new radio (new radio, NR) mobile communication system, or a future-oriented communication system (or a future evolved communication system). Alternatively, the RAN may be an open radio access network (open RAN, O-RAN, or ORAN), a cloud radio access network (cloud radio access network, CRAN), a virtualized radio access network (virtualized RAN, vRAN), or the like. Alternatively, the RAN may be a communication system that integrates two or more of the foregoing systems. The access network element in the RAN may also be referred to as a RAN device, a RAN node, a RAN entity, an access node, or the like.

In a possible scenario, the access network element may be a base station (base station), an evolved NodeB (evolved NodeB, eNodeB), an access point (access point, AP), a transmission reception point (transmission reception point, TRP), a next generation NodeB (next generation NodeB, gNB), a next-generation base station in a future communication system (or a future evolved communication system), a base station in a future mobile communication system, or the like. The access network element may be a macro base station, a micro base station, an indoor base station, a relay node, a donor node/host node, a radio controller, or the like. Alternatively, the access network element may be a server, a wearable device, a vehicle, a vehicle-mounted device, or the like. For example, an access network element in a V2X technology may be a roadside unit (roadside unit, RSU).

In another possible scenario, the access network element may be a module or a unit that completes some functions of the base station; or a plurality of access network elements cooperate to assist the terminal device in implementing radio access, and different access network elements respectively implement some functions of the base station. For example, the access network element may be a central unit (central unit, CU), a distributed unit (distributed unit, DU), or a radio unit (radio unit, RU). Functions of the CU may be implemented by one entity, or may be implemented by different entities. For example, the functions of the CU may be further divided, that is, a control plane and a user plane are separated and implemented by different entities, which are respectively a control plane CU entity (namely, a CU-control plane (control plane, CP) entity) and a user plane CU entity (namely, a CU-user plane (user plane, UP) entity). The CU-CP entity and the CU-UP entity may be coupled to the DU, to jointly complete functions of the access network element. The CU and the DU may be separately disposed, or may be included in a same network element, for example, a baseband unit (baseband unit, BBU).

In different systems, the CU (or the CU-CP and the CU-UP), the DU, or the RU may alternatively have different names, but a person skilled in the art may understand meanings of the names. For example, in an ORAN system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. The access network element in embodiments of this application may be any one of the CU, the CU-CP, the CU-UP, the DU, or the RU, and may be implemented by a software module, a hardware module, or a combination of a software module and a hardware module.

The CU and the DU may be configured based on protocol layer functions of a radio network implemented by the CU and the DU. For example, the CU is configured to implement functions of a packet data convergence protocol (packet data convergence protocol, PDCP) layer and protocol layers (for example, a radio resource control (radio resource control, RRC) layer and/or a service data adaptation protocol (service data adaptation protocol, SDAP) layer) above the PDCP layer; and the DU is configured to implement functions of protocol layers (for example, a radio link control (radio link control, RLC) layer, a media access control (media access control, MAC) layer, and/or a physical (physical, PHY) layer) below the PDCP layer. For another example, the CU is configured to implement functions of protocol layers (for example, an RRC layer and/or an SDAP layer) above a PDCP layer; and the DU is configured to implement functions of the PDCP layer and protocol layers (for example, an RLC layer, a MAC layer, and/or a PHY layer) below the PDCP layer. For specific descriptions of the foregoing protocol layers, refer to a related technical specification of the 3GPP or a technical specification of another applicable communication protocol. The foregoing division of the processing functions of the CU and the DU based on the protocol layers is merely an example, and another division manner may be used. This is not limited in embodiments of this application. For example, in a design, the CU or the DU may be further divided to have some processing functions of protocol layers. In a design, some functions of an RLC layer and functions of a protocol layer above the RLC layer are set on the CU, and remaining functions of the RLC layer and functions of a protocol layer below the RLC layer are set on the DU.

The 5GC may include one or more core network elements, for example, an access and mobility management (access and mobility management function, AMF) network element, a unified data repository (unified data repository, UDR), an authentication (or authentication) server (authentication server function, AUSF) network element, and a location management (location management function, LMF) network element. This is not specifically limited. The AMF is mainly responsible for an access management function, and the UDM is configured to store subscription data, store policy data, and the like. The AUSF is configured to implement user authentication. The LMF is configured to locate a terminal.

In embodiments of this application, a function of a terminal may be implemented by a device, or may be an apparatus that can support the terminal in implementing the function, for example, a chip system or a chip. The apparatus may be installed in the terminal. This is not limited. In embodiments of this application, the network element may be a single device, or may be an apparatus that integrates a plurality of devices, or a software or hardware module (such as a chip or a chip system) in the apparatus. The network element shown in embodiments of this application may alternatively be a logical concept, for example, a software module, or a network function corresponding to a service provided by each network element. The network function may be understood as a virtualized function in virtualization implementation, or may be understood as a network function that provides a service in a service-based network. This is not specifically limited in embodiments of this application.

In a possible implementation, in some cases, the core network element may perform terminal location verification (verification of UE location) (or perform location check on the terminal, or perform check on a location of the terminal, or the like) by using a location service (location service, LCS) defined in the 3GPP, to determine that a physical location of the terminal is within a service range (or an operation range) allowed (allowed) for accessing a PLMN, so as to meet a regulatory compliance requirement. For example, the terminal may be located at a national border, and the core network invokes the LCS service to perform the terminal location verification because cell information reported by the RAN cannot accurately reflect the location of the UE, or a location reported by the UE based on a GNSS is not trusted.

Specifically, the access and mobility management network element or a mobility management entity (mobility management entity, MME) sends a positioning request of the terminal to the location management network element (location management function, LMF) or an evolved serving mobile location center (evolved serving mobile location center, E-SMLC). The LMF/E-SMLC obtains the location of the terminal through calculation by exchanging a positioning-related message with the RAN and the terminal, and returns the location of the terminal to the AME or the MME. The AMF/MME performs terminal location verification based on the location of the terminal returned by the LMF/E-SMLC, that is, determines whether an area represented by the location of the terminal is within the service range allowed by the current PLMN. If it is found that the terminal is not within the service range allowed by the current PLMN serving the terminal, the network initiates deregistration, that is, the terminal is not allowed to access the network, so as to meet a compliance requirement.

The LMF/E-SMLC may determine the location of the terminal by using a multi (multiple)-round-trip time (round-trip time, RTT) (which may be abbreviated as Multi-RTT/multi-RTT). The following describes a multi-RTT positioning process by using an example.

The LMF/E-SMLC may obtain a signal transmission round-trip time between the terminal and the access network element by measuring sending and receiving times of a signal between the access network element and the terminal, and obtain a distance from the terminal to the access network element based on the signal transmission round-trip time between the terminal and the access network element, so as to infer the location of the terminal. For example, one circle is determined by using the access network element as a center of the circle and using the distance from the terminal to the access network element as a radius. An intersection point of three circles is the location of the terminal. Therefore, this positioning manner depends on at least three access network elements.

Specifically, the Multi-RTT combines uplink positioning and downlink positioning, and requires the terminal and the plurality of access network elements, also referred to as transmission reception points (transmission reception point, TRP) (or referred to as a transmitting/receiving point), to send reference signals to each other. The LMF/E-SMLC determines the location of the terminal based on a difference between time for receiving a signal by the terminal and time for sending a signal by the terminal, and a difference between time for receiving a signal by the access network element and time for sending a signal by the access network element.

In a positioning procedure, both the terminal and a transmitting node (access network element) need to measure an arrival time of a signal. For a downlink signal, the access network element records a transmitting time t₀ by using a local clock of the access network element, and the terminal measures an arrival time t₁ of the downlink signal by using a local clock of the terminal; or for an uplink signal, the terminal records a transmitting time t₂ by using a local clock of the terminal, and the access network element measures an arrival time t₃ of the uplink signal by using a local clock of the access network element. A final measured RTT is (t₃-t₀)-(t₂-t₁). The RTT may be used to estimate the location of the terminal.

In the terrestrial 5GS, a new radio positioning protocol A (new radio positioning protocol A, NRPPa) message may be exchanged between the RAN and the core network element (for example, the LMF), to transfer RAN measurement-related information; or an NRPPa message may be exchanged between the terminal and the LMF, to transfer terminal measurement-related information; and the LMF may obtain the location of the terminal through calculation based on the obtained measurement information.

The LMF may send a request to the access network element by using an NRPPa, to request a measurement result of the access network element. The request may carry transmission characteristic information of a requested uplink sounding reference signal (uplink-sounding reference signaling, UL-SRS), including a transmission quantity/duration, bandwidth, a resource type, a requested SRS resource set, a quantity of SRS resources of each SRS resource set, a carrier frequency of SRS transmission bandwidth, and the like of the requested UL-SRS. The LMF may send a request to the RAN by using the NRPPa, where the request carries TRP measurement request information, including a TRP ID, an NR cell global identifier (NR cell global identifier, NCGI) of a TRP that receives a UL-SRS, a terminal-SRS configuration, a measurement periodicity, measurement quality, a response time, and the like.

The RAN may send uplink information/terminal configuration data to the LMF by using the NRPPa, where the configuration data is, for example, a sounding reference signal configuration (SRS configuration) of the terminal, and may further send some assistance information such as a cell global identifier and a TRP ID. The RAN may further send a measurement result, including a cell ID or a TRP ID corresponding to the measurement result, an Rx-Tx (reception-transmission) time difference and a measurement timestamp of the RAN, and the like.

The LMF may send a request to the terminal by using an LPP protocol, where the request carries assistance data, and the assistance data includes a cell global identifier, a downlink positioning reference signal (downlink-positioning reference signaling, DL-PRS) configuration of a candidate TRP, and the like. The LMF may further request, by using the LPP, a positioning method/capability supported by the terminal.

The terminal may send a measurement result to the LMF by using the LPP protocol, including a cell ID or a TRP ID corresponding to the measurement result, an Rx-Tx (reception-transmission) time difference and a measurement timestamp of the terminal, and the like. The terminal may further return the positioning method supported by the terminal to the LMF by using the LPP, for example, positioning based on Multiple-RTT in a satellite access scenario.

In a 4G system, the NRPPa protocol involved in the foregoing positioning process may be replaced with the long term evolution positioning protocol (LTE positioning protocol, LPP) protocol. The LMF may be replaced with the E-SMLC correspondingly.

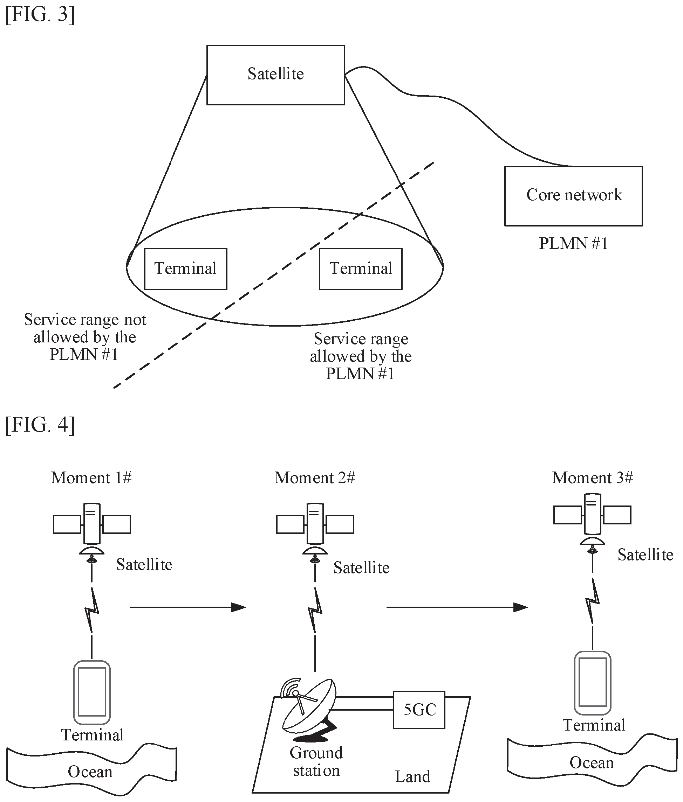

The following describes the terminal location verification by using an example with reference to a diagram of terminal location verification shown in FIG. 3. As shown in FIG. 3, a PLMN currently serving a terminal is a PLMN #1. If a location of the terminal is actually within a service range allowed by the PLMN #1, it indicates that the terminal location verification is compliant; or if a location of the terminal is not within a service range allowed by the PLMN #1, the terminal location verification is not compliant.

In addition, because non-geosynchronous satellites such as a low earth orbit (low earth orbit, LEO) and a medium earth orbit (medium earth orbit, MEO) move relative to the ground, for a single satellite or a plurality of satellites without inter-satellite link networking, or a constellation with a few sparse inter-satellite links, discontinuous coverage occurs when the terminal uses satellite access.

To prevent the terminal from continuously searching for a signal when there is no satellite coverage, an enhancement is made to address this case: After losing satellite coverage, the terminal deactivates an access stratum (access stratum, AS) function and enters a sleep mode. Based on information such as an ephemeris obtained from a RAN and a timer set based on coverage availability information obtained from a core network, the terminal wakes up when the satellite coverage is restored (the terminal stores AS information). Correspondingly, high-latency communication also supports a discontinuous coverage scenario, and an MME also considers a case of discontinuous satellite access coverage when configuring a buffer timer (setting storage duration based on time when the terminal is reachable).

In an actual case, the terminal may be located in an area such as a sea surface or a polar area. When the terminal is covered by a satellite, the satellite cannot establish a connection to a ground station, that is, there is no available feeder link. For example, FIG. 4 shows a discontinuous coverage scenario. As shown in FIG. 4, at a moment #1, a satellite is located over the ocean and can cover a terminal, but because there is no feeder link, the satellite cannot establish a connection to a 5GC on the land through a ground gateway. At a moment #2, the satellite moves over the land and can access the 5GC through the ground gateway. At a moment #3, the satellite covers the terminal on the ocean again. In this discontinuous coverage case, if the terminal needs to receive and send data, the satellite needs to support store-and-forward, and the satellite needs to support buffering of uplink and downlink data, so as to achieve tolerance for latency and interruption. Therefore, the 3GPP is discussing a store-and-forward service in this scenario (that is, a scenario in which a serving link and a feeder link are not available at the same time) based on a regenerative star mode.

Based on the foregoing content, the foregoing manner of performing the terminal location verification based on the LCS service may have the following two problems:
A first problem is that an internet of things (internet of things, IoT) device may not be able to support the LCS service due to a hardware capability or the like, and therefore is not applicable to the foregoing terminal location verification. Therefore, how to perform location check on the IoT device in a satellite access scenario is an urgent problem to be resolved.

A second problem is that the LCS service depends on a network element in the core network, and when the feeder link is disconnected, the satellite cannot establish a connection to the ground station. Therefore, how to perform terminal location check in this scenario needs to be resolved.

To resolve the first problem, embodiments of this application provide a first communication method. In the communication method, a first communication apparatus may obtain, from a second communication apparatus, first information indicating a location of a terminal, and when the location of the terminal is within a service range allowed by a first public land mobile network, send a cell identity corresponding to the location of the terminal to a first mobility management apparatus, or when the location of the terminal is not within a service range allowed by a first public land mobile network, send a cell identity corresponding to the location of the terminal to a compliant mobility management network element (for example, a second mobility management apparatus). In this way, terminal location check can be directly performed based on the location of the terminal, thereby providing a terminal location check mechanism. In addition, when the terminal location check is not compliant, the cell identity corresponding to the location of the terminal is sent to the second mobility management network element, so that the second mobility management network element can page the terminal in time based on the cell identity, thereby improving efficiency of registering the terminal or serving the terminal.

To resolve the second problem, embodiments of this application provide a second communication method. In the communication method, a network element (for example, a location regulation proxy (location regulation proxy, LRP) network element) may be deployed on a satellite, and the location regulation proxy network element may perform terminal location check. In this way, the terminal location check can be performed without using a core network element, so that the terminal location check can be performed when a feeder link is unavailable in the method.

To resolve the second problem, embodiments of this application further provide a third communication method. In the communication method, an access network element may be deployed on a satellite, and the access network element may determine a terminal location check result. For example, the access network element may directly perform terminal location check, or the access network element may obtain a terminal location check result from a location regulation proxy network element. In this way, the terminal location check can be performed without using a core network element, so that the terminal location check can be performed when a feeder link is unavailable in the method.

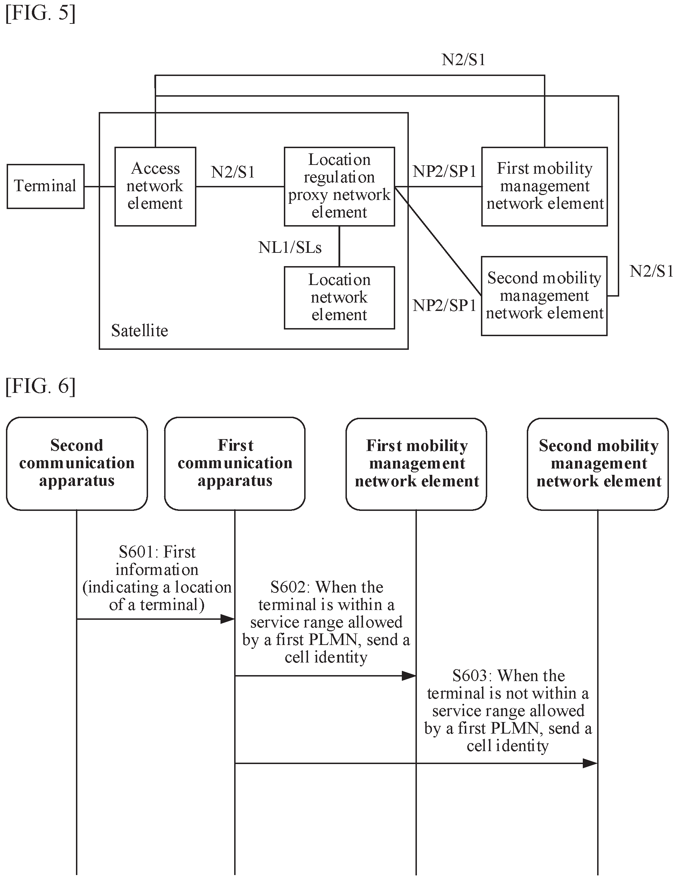

Any one of the foregoing communication methods provided in embodiments of this application is applicable to the communication systems in FIG. 1 to FIG. 4. In addition, the first communication method is applicable to both a satellite communication system in a transparent access mode and a satellite communication system in a regenerative mode. This is not limited. In addition, any one of the foregoing communication methods provided in embodiments of this application is further applicable to a communication scenario shown in FIG. 5. The following describes the communication scenario shown in FIG. 5.

As shown in FIG. 5, the communication scenario includes a terminal, a satellite, a mobility management network element (for example, a first mobility management network element or a second mobility management network element), and the like. An access network element may be deployed on the satellite. Optionally, a location regulation proxy network element, a location network element, and the like may be further deployed on the satellite.

The access network element may be configured to connect the terminal to a network. The location regulation proxy network element may receive an uplink message and/or a downlink message, for example, receive an uplink message and/or a downlink message when a serving link and a feeder link are not established at the same time, and forward a positioning-related message. The location network element may be configured to receive a positioning request and determine a location of the terminal, for example, may obtain the location of the terminal by invoking NRPPa and LPP messages. The location network element may be, for example, an LMF/E-SMLC. The mobility management network element may be used by the terminal to access the network, for example, may be an AMF/MME.

That the location regulation proxy network element is deployed on the satellite may be understood as that a terminal location verification function is deployed on the satellite. The location regulation proxy network element may be an independent network element on the satellite, or the terminal location verification function may be added to an existing network element on the satellite, or the terminal location verification function may be integrated into the first satellite. In embodiments of this application, a specific implementation of the location regulation proxy network element is not specifically limited, and a name of the location regulation proxy network element is not specifically limited, that is, the location regulation proxy network element may have another name. This is not specifically limited. An interface may be newly added between the location regulation proxy network element and the mobility management network element. The interface is used for communication between the location regulation proxy network element and the mobility management network element. In FIG. 5, an Np2 or Sp1 interface is used as an example of the interface, and a name of the interface is not limited actually. The location regulation proxy network element may communicate with the access network element through an N2 or S1 interface, and a name of the interface is not specifically limited. The location regulation proxy network element may communicate with the location network element through an NL1 interface or an SLs interface.

The first mobility management network element in FIG. 5 belongs to a first PLMN. In other words, the first mobility management network element provides a service for a terminal accessing the first PLMN. The second mobility management network element in FIG. 5 belongs to a second PLMN. In other words, the second mobility management network element provides a service for a terminal accessing the second PLMN.

In a possible implementation, the first communication apparatus mentioned in the first communication method provided in embodiments of this application may be the first mobility management network element in FIG. 5, and the second communication apparatus mentioned in the first communication method provided in embodiments of this application is the terminal in FIG. 5. Alternatively, the first communication apparatus is the access network element in FIG. 5, and the second communication apparatus is the first mobility management network element in FIG. 5.

The foregoing specifically describes some scenarios to which embodiments of this application are applicable. Actually, embodiments of this application may be applied to various similar scenarios. This is not specifically limited.

The following describes communication solutions provided in embodiments of this application with reference to the accompanying drawings. In the accompanying drawings corresponding to embodiments of this application, all steps represented by dashed lines are optional steps. In addition, an access network element in embodiments of this application may be, for example, the RAN in FIG. 1, the RAN in FIG. 2, or the access network element in FIG. 5. A first mobility management network element in embodiments of this application may be, for example, the first mobility management network element in FIG. 5. A second mobility management network element in embodiments of this application may be, for example, the second mobility management network element in FIG. 5. A terminal in embodiments of this application may be, for example, the terminal in any one of FIG. 1 to FIG. 4 or FIG. 5. A location regulation proxy network element in embodiments of this application may be the LRP in FIG. 5. A first satellite in embodiments of this application is, for example, the satellite in any one of FIG. 1 to FIG. 5. A first location network element in embodiments of this application is, for example, the location network element in FIG. 5. In addition, with continuous evolution of standards, names and/or functions of network elements, information, or messages in embodiments of this application may change. This is not limited.

The following first describes the first communication method provided in embodiments of this application.

FIG. 6 is a diagram of a first communication method according to an embodiment of this application. The following describes steps in FIG. 6.

S601: A second communication apparatus sends first information to a first communication apparatus. Correspondingly, the first communication apparatus receives the first information from the second communication apparatus. The first information indicates a location of a terminal. For example, the first information may include N bits, where N is a positive integer, and the N bits may indicate the location of the terminal.

A manner in which the first information indicates the location of the terminal (a specific manner in which the N bits indicate the location of the terminal) varies with content of the location of the terminal. The following separately provide descriptions.

In a first manner, if the location of the terminal is a geographical location of the terminal, the first information includes information about the geographical location of the terminal. For content of the geographical location of the terminal, refer to the foregoing content of the geographical location. Details are not described herein again. The geographical location of the terminal is, for example, a GNSS location of the terminal. For content of the GNSS location, refer to the foregoing content of the GNSS location.

For example, the information about the geographical location of the terminal may be a longitude and a latitude of the geographical location of the terminal, and may further include a relative altitude and the like. The N bits may bear or carry the longitude and the latitude of the geographical location of the terminal, and may further include the relative altitude and the like. In this way, the location of the terminal can be intuitively and accurately indicated.

For example, N1 bits in the N bits may be used to carry the longitude of the terminal, and N2 bits in the N bits may be used to carry the latitude of the terminal, where both N1 and N2 are positive integers, and a sum of N1 and N2 is less than or equal to N. The N1 bits may be N1 bits starting from a most significant bit, a least significant bit, or a preset bit in the N bits, and the N2 bits may be N2 bits after the N1 bits, or may be N2 bits starting from a most significant bit, a least significant bit, or a preset bit in the N bits, or the like. A location of a start bit of the N1 bits or the N2 bits in the N bits is not limited.

Optionally, N3 bits in the N bits may be used to carry the relative altitude of the terminal, where N3 is a positive integer, and a sum of N1, N2, and N3 may be equal to N. The N3 bits may be N3 bits after the N1 bits, or may be N3 bits after the N2 bits, or may be N3 bits starting from a most significant bit, a least significant bit, or a preset bit in the N bits, or the like. This is not limited.

For example, the geographical location of the terminal is (20, 20, 100), and the N bits that may be used by the second communication apparatus may be 10100101001100100, which is equivalent to that the first information indicates the location of the terminal. In the N bits, the first five bits from left to right represent the longitude, the 6^{th} to 10^{th} bits from left to right represent the latitude, and the 6^{th} to 12^{th} bits represent the relative altitude of the terminal.

In a second manner, if the location of the terminal is a PLMN to which a geographical location of the terminal belongs, the first information includes an identifier of the PLMN.

For example, the N bits in the first information are used to carry the identifier of the PLMN. For example, if the PLMN to which the geographical location of the terminal belongs is a first PLMN, and an identifier of the first PLMN is 1, the N bits may carry 1, which is equivalent to indicating the location of the terminal; or if the PLMN to which the geographical location of the terminal belongs is a second PLMN, and an identifier of the second PLMN is 2, the N bits may carry 2, which is equivalent to indicating the location of the terminal.

In a third manner, if the location of the terminal is a cell identity corresponding to a geographical location of the terminal, the first information includes the cell identity. For content of the cell identity, refer to the foregoing content. Details are not described herein again.

For example, if the cell identity corresponding to the location of the terminal, that is, the geographical location of the terminal is 1, the N bits may carry 1, which is equivalent to indicating the location of the terminal.

In a fourth manner, if the location of the terminal is a synchronization signal corresponding to the terminal, the first information may indicate an index of the synchronization signal.

For example, if the synchronization signal corresponding to the terminal is an SSB 2, the N bits may carry 2, which is equivalent to indicating the location of the terminal.

In a fifth manner, if the location of the terminal is a physical area in which the terminal is located (for ease of differentiation, the physical area in which the terminal is located is referred to as a first physical area below), the first information may indicate a number of the physical area in which the terminal is located. The N bits in the first information carry the number of the first physical area, which is equivalent to that the first information indicates the location of the terminal. The number of the first physical area may be negotiated by the second communication apparatus and the first communication apparatus, or may be preconfigured or predefined in a protocol, for example, determined by using a protocol. This is not specifically limited. Optionally, the number of the first physical area may be, for example, an administrative region code corresponding to the location of the terminal. A number of a geographical location of the terminal is indicated, so that bit overheads are reduced.

For example, the number of the first physical area is 1, which corresponds to a province A to which the geographical location of the terminal belongs, indicating that the terminal is at a location in the province A.

Certainly, there may be a plurality of manners in which the first information indicates the location of the terminal. This is not specifically limited in this embodiment of this application.

An implementation form of the first information and a manner in which the second communication apparatus sends the first information to the first communication apparatus may vary with the first communication apparatus and the second communication apparatus. The following separately provides descriptions.

A1. The first communication apparatus is an access network element, and the second communication apparatus is a first mobility management network element. The first mobility management network element is a mobility management network element that currently serves the terminal. The first mobility management network element belongs to the first PLMN, which may be understood as that the first mobility management network element is a mobility management network element that serves the terminal in the first PLMN. Optionally, the first mobility management network element may directly send the first information to the access network element. A type of the first information may be a NAS message. The first information may be specifically carried in a registration request or a service request.

In A1, optionally, the second communication apparatus determines whether the location of the terminal is within a service range allowed by the first PLMN. Further, the second communication apparatus further indicates, by using the first information, that the terminal is within the service range allowed by the first PLMN, or the terminal is not within the service range allowed by the first PLMN. In this way, the first communication apparatus can determine, by receiving the first information, whether the location of the terminal is within the service range allowed by the first PLMN.

For example, the second communication apparatus may determine, based on the first information, a PLMN currently serving the terminal as the first PLMN, or the second communication apparatus prestores a PLMN currently serving the terminal as the first PLMN. For example, the second communication apparatus may prestore the first PLMN currently serving the terminal in a process of accessing the terminal, so that the second communication apparatus can directly determine, based on the location of the terminal, whether the location of the terminal is within the service range allowed by the first PLMN.

Determining whether the location of the terminal is within the service range allowed by the first PLMN may alternatively be described as one of the following: determining that the location of the terminal is within the service range allowed by the first PLMN, or is not within the service range allowed by the first PLMN; determining whether the terminal is within the service range allowed by the first PLMN; or determining that the terminal is within the service range allowed by the first PLMN, or is not within the service range allowed by the first PLMN. This is not specifically limited.

A manner in which the second communication apparatus determines whether the location of the terminal belongs to the service range allowed by the first PLMN varies with specific content of the location of the terminal. The following separately provides descriptions.

B1. The location of the terminal is the geographical location of the terminal.

In B1, the second communication apparatus may directly determine whether the geographical location of the terminal is within the service range allowed by the first PLMN.

If the geographical location of the terminal is within the service range allowed by the first PLMN, it indicates that the location of the terminal is within the service range allowed by the first PLMN. If the geographical location of the terminal is not within the service range allowed by the first PLMN, it indicates that the location of the terminal is not within the service range allowed by the first PLMN.

B2. The location of the terminal is the cell corresponding to the terminal.

If the cell represents a physical cell, the second communication apparatus may directly determine whether the physical cell corresponding to the terminal is within the service range allowed by the first PLMN.

For example, if the cell corresponding to the terminal is within the service range allowed by the first PLMN, or a center of the cell corresponding to the terminal is within the service range allowed by the first PLMN, or a first specific area of the cell corresponding to the terminal is within the service range allowed by the first PLMN, or an overlapping area between the cell corresponding to the terminal and the service range allowed by the first PLMN is greater than or equal to a second preset range, it indicates that the location of the terminal is within the service range allowed by the first PLMN. The first specific area is, for example, a central area of the cell. If the cell corresponding to the terminal is not within the service range allowed by the first PLMN, or a center of the cell corresponding to the terminal is not within the service range allowed by the first PLMN, or a first specific area of the cell corresponding to the terminal is not within the service range allowed by the first PLMN, or an edge area corresponding to the terminal is not within the service range allowed by the first PLMN, or an overlapping area between the cell corresponding to the terminal and the service range allowed by the first PLMN is less than a second preset range, it indicates that the location of the terminal is not within the service range allowed by the first PLMN. The first specific area, a range of the edge area, and the second preset range may all be preconfigured or predefined in the second communication apparatus, or determined by the second communication apparatus. This is not limited.

If the cell represents a logical cell, and the logical cell corresponds to a physical cell, the second communication apparatus may directly determine whether the physical cell corresponding to the logical cell corresponding to the terminal is within the service range allowed by the first PLMN. For a manner of determining whether the physical cell is within the service range allowed by the first PLMN, refer to the foregoing description. Details are not described herein again.

If the cell represents a logical cell, and the logical cell corresponds to a geographical area, the second communication apparatus may directly determine whether the geographical area is within the service range allowed by the first PLMN.

Examples are as follows:
B3. The location of the terminal is the PLMN corresponding to the terminal.

In B3, the second communication apparatus may directly determine whether the PLMN to which the geographical location of the terminal belongs is the first PLMN.

If the PLMN to which the geographical location of the terminal belongs is the first PLMN, it indicates that the location of the terminal is within the service range allowed by the first PLMN. If the PLMN to which the geographical location of the terminal belongs is not the first PLMN, it indicates that the location of the terminal is not within the service range allowed by the first PLMN.

If the geographical area is within the service range allowed by the first PLMN, or a center of the geographical area is within the service range allowed by the first PLMN, or a second specific area of the geographical area is within the service range allowed by the first PLMN, or an edge area of the geographical area is within the service range allowed by the first PLMN, or an overlapping area between the geographical area and the service range allowed by the first PLMN is greater than or equal to a second preset range, it indicates that the location of the terminal is within the service range allowed by the first PLMN. The second specific area is, for example, a central area of the geographical area. If the geographical area is not within the service range allowed by the first PLMN, or a center of the geographical area is not within the service range allowed by the first PLMN, or a second specific area of the geographical area is not within the service range allowed by the first PLMN, or an edge area of the geographical area is not within the service range allowed by the first PLMN, or an overlapping area between the geographical area and the service range allowed by the first PLMN is less than a second preset range, it indicates that the location of the terminal is not within the service range allowed by the first PLMN. The second feature area, a range of the edge area, and the second preset range may all be preconfigured or predefined in the second communication apparatus, or determined by the second communication apparatus. This is not limited.

B4. The location of the terminal is the synchronization signal corresponding to the terminal.

In B4, the second communication apparatus may directly determine whether an area (for ease of description, the area is referred to as a first area below) corresponding to a synchronization channel is within the first PLMN.

If the first area is within the service range allowed by the first PLMN, or a center of the first area is within the service range allowed by the first PLMN, or a third specific area of the first area is within the service range allowed by the first PLMN, or an edge area of the first area is within the service range allowed by the first PLMN, or an overlapping area between the first area and the service range allowed by the first PLMN is greater than or equal to a second preset range, it indicates that the location of the terminal is within the service range allowed by the first PLMN. The third specific area is, for example, a central area of the first area. If the first area is not within the service range allowed by the first PLMN, or a center of the first area is not within the service range allowed by the first PLMN, or a third specific area of the first area is not within the service range allowed by the first PLMN, or an edge area of the first area is not within the service range allowed by the first PLMN, or an overlapping area between the first area and the service range allowed by the first PLMN is less than a second preset range, it indicates that the location of the terminal is not within the service range allowed by the first PLMN. The third specific area, a range of the edge area, and the second preset range may all be preconfigured or predefined in the second communication apparatus, or determined by the second communication apparatus. This is not limited.

B5. The location of the terminal is the physical area corresponding to the terminal.

In B5, the second communication apparatus may directly determine whether a PLMN to which the physical area corresponding to the terminal belongs is the first PLMN.

If the physical area is within the service range allowed by the first PLMN, or a center of the physical area is within the service range allowed by the first PLMN, or a fourth specific area of the physical area is within the service range allowed by the first PLMN, or an edge area of the physical area is within the service range allowed by the first PLMN, or an overlapping area between the physical area and the service range allowed by the first PLMN is greater than or equal to a second preset range, it indicates that the location of the terminal is within the service range allowed by the first PLMN. The fourth specific area is, for example, a central area of the physical area. If the physical area is not within the service range allowed by the first PLMN, or a center of the physical area is not within the service range allowed by the first PLMN, or a fourth specific area of the physical area is not within the service range allowed by the first PLMN, or an edge area of the physical area is not within the service range allowed by the first PLMN, or an overlapping area between the physical area and the service range allowed by the first PLMN is less than a second preset range, it indicates that the location of the terminal is not within the service range allowed by the first PLMN. The fourth specific area, a range of the edge area, and the second preset range may all be preconfigured or predefined in the second communication apparatus, or determined by the second communication apparatus. This is not limited.

A2. The first communication apparatus is a first mobility management network element, and the second communication apparatus is the terminal.

A type of the first information may alternatively be, for example, an N2 interface message or an S1 interface message. This is not specifically limited. The first information may be carried in a registration request or a service request. For content of the registration request and the service request, refer to the foregoing content. Details are not described herein again. In A2, optionally, the terminal may send the first information to the first mobility management network element through an access network element.

S602: When the terminal is within the service range allowed by the first PLMN, the first communication apparatus sends the cell identity to the first mobility management network element.

When the first information indicates that the location of the terminal is within the service range allowed by the first PLMN, or the location of the terminal is not within the service range allowed by the first PLMN, after receiving the first information, the first communication apparatus may determine whether the terminal is within the service range allowed by the first PLMN. Alternatively, the first communication apparatus determines, based on the location of the terminal, whether the terminal is within the service range allowed by the first PLMN. For a manner in which the first communication apparatus determines whether the terminal is within the service range allowed by the first PLMN, refer to the foregoing content in which the second communication apparatus determines, based on the location of the terminal, whether the terminal is within the service range allowed by the first PLMN. Details are not described again.

In conclusion, the first communication apparatus can determine that the location of the terminal is within the service range allowed by the first PLMN, or the location of the terminal is not within the service range allowed by the first PLMN. If the location of the terminal is within the service range allowed by the first PLMN, the first communication apparatus may send the cell identity to the first mobility management network element.

For example, a first correspondence may be preconfigured or predefined in the first communication apparatus, and the first correspondence includes a correspondence between a geographical area and a cell identity. In this way, the first communication apparatus can determine, based on the first correspondence and the location of the terminal, a geographical area corresponding to the location of the terminal, and further determine a cell identity corresponding to the geographical area, that is, the cell identity corresponding to the location of the terminal. A plurality of geographical areas corresponding to a plurality of cell identities may partially overlap. This is not limited. Alternatively, when the first information indicates the location of the terminal by using the cell identity, the first communication apparatus may directly determine the cell identity based on the first information.

For content of the cell identity, refer to the foregoing content. Details are not described herein again. The cell identity is equivalent to representing the location of the terminal, and may be used to determine the location of the terminal, page the terminal, and the like. In a satellite communication system, a satellite moves at a high speed. Therefore, the first communication apparatus sends the cell identity to the first mobility management network element in time, so that the first mobility management network element senses the location of the terminal in time, and registers the terminal and provides a service for the terminal in time.

In addition to sending the cell identity to the first mobility management network element, if the first information is carried in the registration request or the service request, optionally, the first communication apparatus may further forward the registration request or the service request to the first mobility management network element, so that the first mobility management network element can register the terminal or provide a service for the terminal in time. In this case, the first communication apparatus may add the cell identity to the registration request or the service request, and send the registration request or the service request to the first mobility management network element.

S603: When the terminal is not within the service range allowed by the first PLMN, the first communication apparatus sends the cell identity to a second mobility management network element.

The second mobility management network element belongs to a PLMN corresponding to the location of the terminal, which may be understood as that the second mobility management network element is a mobility management network element that serves the terminal in a second PLMN. That is, a mobility management network element currently serving the terminal is the first mobility management network element, but the PLMN actually corresponding to the location of the terminal may not be the first PLMN to which the first mobility management network element belongs, and may be the second PLMN. In this case, the first communication apparatus may send the cell identity to the second mobility management network element in the second PLMN. In this way, the second mobility management network element can page the terminal earlier based on the cell identity, and provide a service for the terminal, thereby facilitating quick switching and network access of the terminal.

The following describes an example of a manner in which the first communication apparatus determines the second mobility management network element.

A second correspondence may be prestored in the first communication apparatus, and the second correspondence indicates a correspondence between a second PLMN and a mobility management network element. For example, the second correspondence includes a correspondence between an identifier of the second PLMN and an identifier of the mobility management network element. In this way, the first communication apparatus can directly determine that the mobility management network element corresponding to the second PLMN is the second mobility management network element, and send the cell identity to the second mobility management network element.

When there are a plurality of mobility management network elements corresponding to the second PLMN, the first communication apparatus may determine a mobility management network element that is in the plurality of mobility management network elements and that is closest to the terminal as the second mobility management network element, or determine a mobility management network element that is in the plurality of mobility management network elements and that has best quality of communication with the terminal as the second mobility management network element. This is not specifically limited.

In addition to sending the cell identity to the second mobility management network element, if the first information is carried in the registration request or the service request, optionally, the first communication apparatus may further forward the registration request or the service request to the second mobility management network element, so that the second mobility management network element can register the terminal or provide a service for the terminal in time. In this case, optionally, the first communication apparatus may add the cell identity to the registration request or the service request, and send the registration request or the service request to the second mobility management network element. In this way, the terminal does not need to separately initiate the registration request, the service request, or the like to the second mobility management network element, thereby reducing a quantity of interactions in the communication system.

S602 and S603 are two possible cases. In one terminal location verification process, either step S602 or step S603 is performed.

In this embodiment of this application, the second communication apparatus may send the location of the terminal to the first communication apparatus, so that the first communication apparatus can perform terminal location verification, or the first communication apparatus can obtain a terminal location verification result from the first mobility management network element. This provides a mechanism applicable to terminal location verification on various terminal devices like an IoT device. In addition, if the terminal location verification is compliant, the first communication apparatus may map the location of the terminal to the cell identity and send the cell identity to the first mobility management network element, so that the first mobility management network element can quickly register the terminal to serve the terminal. If the terminal location verification is not compliant, the first communication apparatus may reselect a mobility management network element based on an actual location of the terminal, so that the new mobility management network element quickly registers the terminal to serve the terminal, thereby reducing network switching time of the terminal.

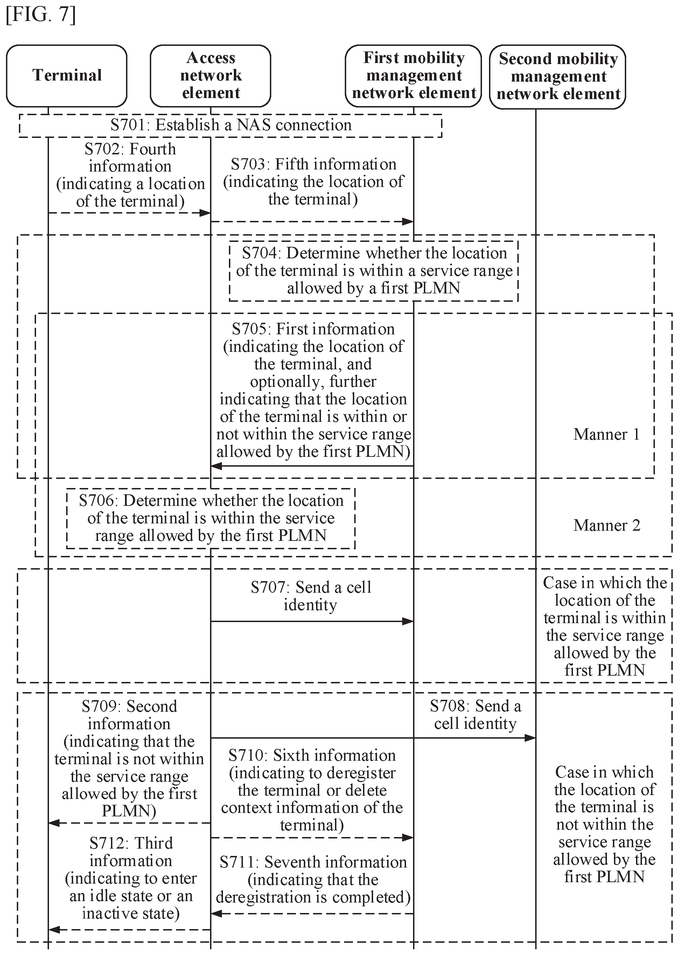

An interaction process between network elements varies with the first communication apparatus and the second communication apparatus. The following describes an example of interaction between network elements with reference to a diagram of a communication method shown in FIG. 7. In FIG. 7, the case shown in A1 (that is, the first communication apparatus is the access network element, and the second communication apparatus is the first mobility management) is used as an example. The following describes steps shown in FIG. 7.

S701: A terminal establishes a non-access stratum (non-access stratum, NAS) connection to the first mobility management network element. The first mobility management network element currently serves the terminal, the first mobility management network element belongs to a first PLMN, and the first PLMN currently serves the terminal.

For example, the terminal may request the first mobility management network element to send a connection establishment request message. Optionally, the connection request message may carry an identifier of the terminal. After receiving the connection establishment request message, the first mobility management network element may send a NAS security mode command message to the terminal, where the NAS security mode command message includes key information, and the key information is used to encrypt a message between the terminal and the first mobility management network element. Optionally, the NAS security mode command message may further include algorithm information, so that the terminal determines an algorithm used between the terminal and the first mobility management network element, or algorithm information may be preconfigured or predefined in the terminal.

In this way, the terminal can establish the NAS connection to the first mobility management network element through the access network element, so that the terminal subsequently communicates with the first mobility management network element based on the NAS connection. In addition, when the terminal is, for example, an IoT device, specifically, an NB IoT device, the terminal may not support AS or AS communication is insecure. In this case, the terminal may communicate with the first mobility management network element by using the established NAS connection.

When the terminal has established the NAS connection or another communication connection to the first mobility management network element, step S701 does not need to be performed, that is, S701 is an optional step, and is shown by a dashed line in FIG. 7.

S702: The terminal sends fourth information to the access network element. Correspondingly, the access network element receives the fourth information from the terminal. The fourth information indicates a location of the terminal.

The fourth information may be a NAS message or another message. This is not specifically limited. For example, the fourth information may be carried in a registration request or a service request. A specific form of the fourth information is not limited in this embodiment of this application. For a manner in which the fourth information indicates the location of the terminal, refer to the content in which the first information indicates the location of the terminal in FIG. 6. Details are not described again. For a meaning of the location of the terminal, refer to the content of the location of the terminal in FIG. 6. Details are not described herein again.

For example, the terminal measures a GNSS signal from a network side (for example, the access network element), to obtain the location of the terminal, specifically, for example, a GNSS location of the terminal. Alternatively, the location of the terminal may be prestored in the terminal, and a manner in which the terminal obtains the location of the terminal is not limited in this embodiment of this application.

When the terminal receives the key information from the first mobility management network element, the terminal may further encrypt the first information by using the key information, or may encrypt information that is carried in the first information and that indicates the location of the terminal, to ensure security of the location of the terminal.

Optionally, in addition to indicating the location of the terminal, the fourth information may further include the identifier of the terminal. Optionally, the fourth information may further include an identifier of a PLMN currently serving the terminal (that is, an identifier of the first PLMN), and the like. For content of the identifier of the terminal and the identifier of the PLMN, refer to the foregoing content of the identifier of the terminal and the identifier of the PLMN. Details are not described herein again.

S703: The access network element sends fifth information to the first mobility management network element. Correspondingly, the first mobility management network element receives the fifth information from the access network element. The fifth information indicates the location of the terminal.

For a manner in which the fifth information indicates the location of the terminal, refer to the content in which the first information indicates the location of the terminal in FIG. 6. Details are not described herein again. The fifth information may also be the NAS message. The third information may also be carried in the registration request or the service request. This is not limited. For content of the registration request and the service request, refer to the foregoing content of the registration request or the service request. Details are not described herein again. In addition to indicating the location of the terminal, the fifth information may further include the identifier of the terminal. Optionally, the fifth information may further include the identifier of the PLMN currently serving the terminal (that is, the identifier of the first PLMN), and the like.

The fifth information and the fourth information may be completely the same, or may be different. For example, the access network element may perform format conversion or encapsulation on the fourth information, to obtain the fifth information. This is not limited.

S704: The first mobility management network element determines whether the location of the terminal is within a service range allowed by the first PLMN.

If the third information indicates the identifier of the first PLMN, the first mobility management network element may determine, based on the fifth information, that the PLMN currently serving the terminal is the first PLMN. Alternatively, if the first mobility management network element corresponds to only one PLMN (or exclusively occupies one PLMN), the first mobility management network element may determine that the PLMN corresponding to the first mobility management network element is the first PLMN. Alternatively, the first PLMN serving the terminal may be prestored in the first mobility management network element. Further, the first mobility management network element may directly determine whether the location of the terminal is within the service range allowed by the first PLMN. For a manner in which the first mobility management network element determines whether the location of the terminal is within the service range allowed by the first PLMN, refer to the content in which the second communication apparatus determines whether the location of the terminal is within the service range allowed by the first PLMN in FIG. 6. Details are not described again.

Before the first mobility management network element determines whether the location of the terminal is within the service range allowed by the first PLMN, optionally, if the fifth information is encrypted by using the key information, or information that is in the fifth information and that indicates the location of the terminal is encrypted, the first mobility management network element may decrypt the fifth information by using the key information corresponding to the terminal, to obtain the location of the terminal.

S705: The first mobility management network element sends the first information to the access network element. Correspondingly, the access network element receives the first information from the first mobility management network element.

For content of the first information, refer to the content of the first information in S601. Details are not described again. In this case, the information that is in the first information and that indicates the location of the terminal may be unencrypted information, so that the access network element can directly obtain the location of the terminal.

When the third information includes the identifier of the terminal, optionally, the first information may further include the identifier of the terminal. When the third information further includes the identifier of the PLMN currently serving the terminal (that is, the identifier of the first PLMN), optionally, the first information may further include the identifier of the PLMN currently serving the terminal (that is, the identifier of the first PLMN), and the like.

When S704 is performed, optionally, the first information further indicates that the location of the terminal (or the terminal) is within or not within the service range allowed by the first PLMN. In this way, the access network element can directly determine, based on the first information, that the location of the terminal is within the service range allowed by the first PLMN, or is not within the service range allowed by the first PLMN.

The first mobility management network element may directly perform step S705 after obtaining the location of the terminal. Alternatively, the first mobility management network element may perform step S705 when a first condition is met: The first condition includes at least one of C1 to C3.

C1. A type of the terminal is a first type. For example, the first type indicates a type of terminal like an IoT device, or the first type indicates a type of terminal that does not support an LCS service. This is not limited.

The first type may be preconfigured or predefined in the first mobility management network element, or may be obtained by the first mobility management network element from the terminal, so as to determine whether the type of the terminal is the first type.

C2. An access type used by the terminal is satellite access. The access type used by the terminal may be an access technology, an access manner, or the like that can be supported by the terminal, or may be an access technology used by the terminal for current access, or the like. The satellite access may be understood as that the terminal accesses a network (for example, a core network) via a satellite, or the terminal implements a network service via a satellite.

The access type used by the terminal may be preconfigured or predefined in the first mobility management network element, or may be obtained by the first mobility management network element from the terminal, so as to determine whether the access type of the terminal is the satellite access.

C3. The access network element supports terminal location verification. That the access network element supports the terminal location verification may be understood as that the access network element has a capability (or a function) of the terminal location verification, or the access network element has a capability of assisting in the terminal location verification.

For example, that the access network element supports the terminal location verification may be learned by the first mobility management network element from the access network element.

S704 and S705 may be considered as a manner 1 in which the access network element determines that the location of the terminal is within or not within the service range allowed by the first PLMN.

S706: The access network element determines whether the location of the terminal is within the service range allowed by the first PLMN.

For a manner in which the access network element determines whether the location of the terminal is within the service range allowed by the first PLMN, refer to the content of whether the location of the terminal is within the service range allowed by the first PLMN in S704 and the content in which the first mobility management network element determines whether the location of the terminal is within the service range allowed by the first PLMN. Details are not described again.

S705 and S706 are a manner 2 in which the access network element determines that the location of the terminal is within or not within the service range allowed by the first PLMN.

In an actual execution process, only steps S704 and S705 may be performed, or only steps S705 and S706 may be performed. Therefore, one of S704 and S706 is an optional step, and the two steps are shown by dashed lines in FIG. 7. Alternatively, both steps S704 and S706 may be performed, which it is equivalent to that terminal location verification is performed twice, thereby improving reliability of the terminal location verification.

S707: When the location of the terminal is within the service range allowed by the first PLMN, the access network element sends a cell identity to the first mobility management network element.

When the access network element may determine, based on the first information, that the location of the terminal (or the terminal) is within the service range allowed by the first PLMN, or may determine that the location of the terminal is within the service range allowed by the first PLMN, the access network element may map the location of the terminal to the cell identity. For a manner in which the access network element determines the cell identity, refer to the content in which the first communication apparatus determines the cell identity in FIG. 6. Details are not described herein again. Alternatively, when the first information indicates the location of the terminal by using the cell identity, the access network element may directly obtain the cell identity based on the first information. Further, the access network element sends the cell identity to the first mobility management network element. The cell identity may be carried in an N2 interface message or an S1 interface message. This is not specifically limited. For content of the cell identity, refer to the foregoing content of the cell identity. Details are not described herein again. The cell identity is equivalent to representing the location of the terminal, and may be used to determine the location of the terminal, page the terminal, and the like. In a satellite communication system, a satellite moves at a high speed. Therefore, the access network element sends the cell identity to the first mobility management network element in time, so that the first mobility management network element senses the location of the terminal in time, and registers the terminal and provides a service for the terminal in time.

S708: When the location of the terminal is not within the service range allowed by the first PLMN, the access network element sends a cell identity to a second mobility management network element. Correspondingly, the second mobility management network element receives the cell identity from the access network element.

For a manner in which the access network element determines the cell identity, refer to the foregoing content. For a meaning of the cell identity, refer to the foregoing content. Details are not described herein again.

When the access network element may determine, based on the first information, that the location of the terminal (or the terminal) is not within the service range allowed by the first PLMN, or may determine that the location of the terminal is not within the service range allowed by the first PLMN, if the location of the terminal (or the terminal) is not within the service range allowed by the first PLMN, it indicates that the terminal location verification is not compliant (or fails). Therefore, the access network element may determine a PLMN (a second PLMN is used as an example in this embodiment of this application) actually corresponding to the location of the terminal. The access network element may send the cell identity to the second mobility management network element in the second PLMN. The cell identity may be carried in an N2 interface message or an S1 interface message. This is not limited. For a manner in which the access network element determines the second mobility management network element, refer to the content in which the first communication apparatus determines the second mobility management network element in FIG. 6. Details are not described herein again.

If the first information is carried in the registration request or the service request, optionally, the access network element may further forward the registration request or the service request to the second mobility management network element, so that the second mobility management network element can register the terminal or provide a service for the terminal in time. In this case, optionally, the cell identity may be carried in the registration request or the service request.

S707 and S708 are two possible cases. In one terminal location verification process, either step S707 or step S708 is performed.

S709: The access network element sends second information to the terminal. Correspondingly, the terminal receives the second information from the access network element. The second information indicates that the terminal is not within the service range allowed by the first PLMN. In this way, the terminal determines that the terminal location verification is not compliant.

S710: The access network element sends sixth information to the first mobility management network element. Correspondingly, the first mobility management network element receives the sixth information from the first mobility management network element. The sixth information indicates to deregister the terminal or release context information of the terminal.

When the location of the terminal is not within the service range allowed by the first PLMN, the access network element may notify the first mobility management network element to deregister the terminal or release (or delete) the context information of the terminal, so that the first mobility management network element can release (or delete) the context information of the terminal, which is equivalent to that the first mobility management network element does not provide a service for the terminal. The context information of the terminal is stored information related to the terminal, for example, at least one of session information, key information, or an encryption algorithm of the terminal that is stored in the first mobility management network element. Optionally, the sixth information may include an identifier of the terminal, so that the first mobility management network element determines a specific terminal that is to be deregistered.

S711: The first mobility management network element sends seventh information to the access network element. Correspondingly, the access network element receives the seventh information from the first mobility management network element. The sixth information indicates that the deregistration is completed. Optionally, the seventh information includes the identifier of the terminal.

After deregistering the terminal, the first mobility management network element may further send the seventh information to the access network element, to notify the access network element that the deregistration of the terminal is completed. Optionally, the seventh information may include an identifier of the terminal, so that the access network element determines a specific terminal that is completely deregistered.

S712: The access network element sends third information to the terminal. Correspondingly, the terminal receives the third information from the access network element. The third information indicates the terminal to enter an idle state or enter an inactive state.

The access network element may further notify the terminal to enter the idle state, enter the inactive state, or the like, so as to avoid a case in which the first PLMN continues to serve the terminal, or a case in which a waste of resources is caused because the terminal continues to make an invalid attempt to communicate with the first mobility management network element.

The access network element performs steps S709 and S712, or the access network element may perform one of steps S709 and S712, or perform neither S709 nor S712. This is not limited. In conclusion, both S709 and S712 are optional steps, and are shown by dashed lines in FIG. 7.

In another possible design, that the access network element sends the third information to the terminal is equivalent to indicating that the terminal is not within the service range allowed by the first PLMN. In this case, sending the third information may be considered as an implementation of sending the second information (in other words, S712 may be considered as an implementation of S709). In this case, step S709 does not need to be performed.

S709 to S712 are steps that may be performed when the location of the terminal is not within the service range allowed by the first PLMN. Certainly, these steps may not be performed, or some of these steps may be performed (for example, S709 is performed, S710 and S711 are performed, S712 is performed, or S710 to S712 are performed). In conclusion, S709 to S712 are all optional steps, and are shown by dashed lines in FIG. 7.

In this embodiment of this application, the first mobility management network element may reroute the location of the terminal to the access network element, so that the access network element can perform the terminal location verification, or the first mobility management network element can perform terminal location verification based on the location of the terminal, and notify the access network element of a terminal location verification result. This provides a mechanism applicable to terminal location verification on various terminal devices like an IoT device. In addition, if the terminal location verification is compliant, the access network element may map the location of the terminal to the cell identity and send the cell identity to the first mobility management network element, so that the first mobility management network element can quickly register the terminal to serve the terminal. If the terminal location verification is not compliant, the access network element may reselect a mobility management network element based on an actual location of the terminal, or directly release a connection of the terminal and/or notify the first mobility management network element to release a connection of the terminal, thereby facilitating quick network switching of the terminal.

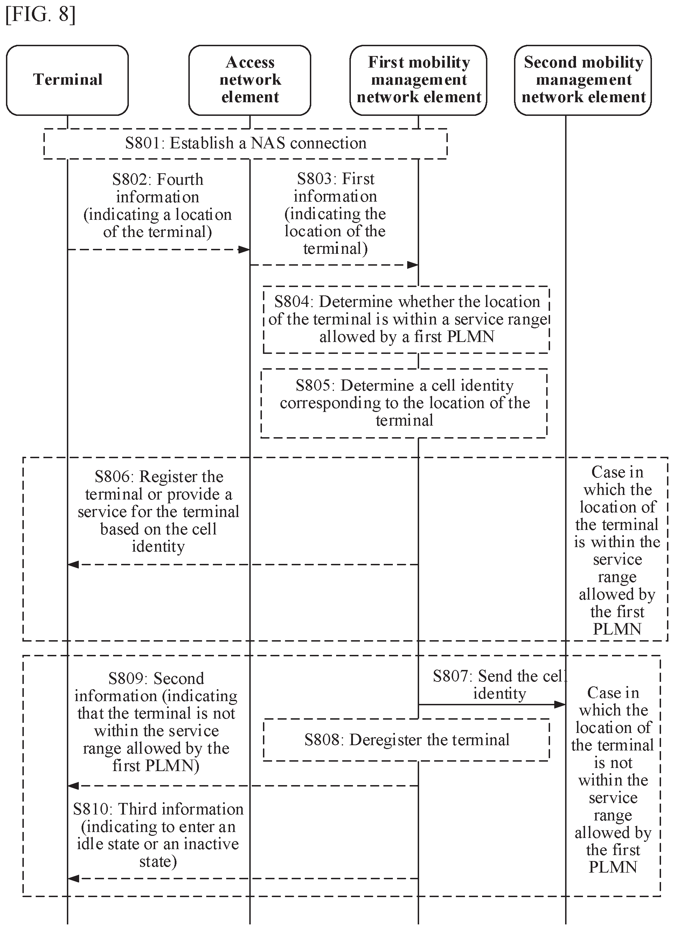

An interaction process between network elements varies with the first communication apparatus and the second communication apparatus. The following describes an example of interaction between network elements with reference to a diagram of a communication method shown in FIG. 8. In FIG. 8, the case shown in A2 (that is, the first communication apparatus is the first mobility management apparatus, and the second communication apparatus is the terminal) is used as an example. The following describes steps shown in FIG. 8.

S801: The terminal establishes a NAS connection to the first mobility management network element. For content of establishing the NAS connection, refer to the content of establishing the NAS connection in S701. Details are not described again.

S802: The terminal sends fourth information to an access network element. Correspondingly, the access network element receives the fourth information from the terminal. The fourth information indicates a location of the terminal. For content of the fourth information and content of the location of the terminal, refer to the content of the fourth information and the content of the location of the terminal in FIG. 7. Details are not described again.

S803: The access network element sends first information to the first mobility management network element. Correspondingly, the first mobility management network element receives the first information from the access network element. The first information indicates the location information of the terminal.

The first information may be a NAS message. For example, the first information may be carried in a registration request or a service request. A specific form of the fourth information is not limited in this embodiment of this application. For content of the registration request and the service request, refer to the foregoing content of the registration request and the service request. Details are not described again. The first information may further indicate an identifier of the terminal. Optionally, the first information further indicates an identifier of a PLMN currently serving the terminal (that is, an identifier of a first PLMN), and the like.

S804: The first mobility management network element determines whether the location of the terminal is within a service range allowed by the first PLMN.

For a manner in which the first mobility management network element determines the first PLMN, content of whether the location of the terminal is within the service range allowed by the first PLMN, and a manner of determining whether the location of the terminal is within the service range allowed by the first PLMN, refer to the manner in which the first mobility management network element determines the first PLMN, the content of whether the location of the terminal is within the service range allowed by the first PLMN, and the content of determining whether the location of the terminal is within the service range allowed by the first PLMN in FIG. 7. Details are not described again.

S805: The first mobility management network element determines a cell identity corresponding to the location of the terminal. S805 may be equivalent to that the first mobility management network element determines the cell identity.

For content of the cell identity, and content in which the first mobility management network element determines the cell identity corresponding to the location of the terminal, refer to the content of the cell identity, and the content in which the access network element determines the cell identity corresponding to the location of the terminal in FIG. 7. Details are not described again.

S806: When the location of the terminal is within the service range allowed by the first PLMN, the first mobility management network element registers the terminal or provides a service for the terminal based on the cell identity.

When the location of the terminal is within the service range allowed by the first PLMN, it indicates that the first mobility management network element needs to serve the terminal. Therefore, when the first information is the registration request, the first mobility management network element registers the terminal based on the cell identity; or when the first information is the service request, the first mobility management network element provides a corresponding service for the terminal based on the cell identity.

S807: When the location of the terminal is not within the service range allowed by the first PLMN, the first mobility management network element sends the cell identity to a second mobility management network element. Correspondingly, the second mobility management network element receives the cell identity from the first mobility management network element.

When the location of the terminal (or the terminal) is not within the service range allowed by the first PLMN, it indicates that terminal location verification is not compliant (or fails). Therefore, the first mobility management network element may determine a PLMN (a second PLMN is used as an example in this embodiment of this application) actually corresponding to the location of the terminal, and the first mobility management network element may send the cell identity to the second mobility management network element in the second PLMN. The cell identity may be carried in an N2 interface message or an S1 interface message. This is not limited. For a manner in which the first mobility management network element determines the second mobility management network element, refer to the content in which the second communication apparatus determines the second mobility management network element in FIG. 6. Details are not described herein again.

In addition to sending the cell identity to the second mobility management network element, if the fourth information is the registration request or the service request, optionally, the first mobility management network element may further forward the registration request or the service request to the second mobility management network element, so that the second mobility management network element can register the terminal or provide a service for the terminal in time.

S806 and S807 are two possible cases. In one terminal location verification process, either step S806 or step S807 is performed.

S808: The first mobility management network element deregisters the terminal. For a manner in which the first mobility management network element deregisters the terminal, refer to the content in which the first mobility management network element deregisters the terminal in FIG. 6. Details are not described herein again.

S809: The first mobility management network element sends second information to the terminal. Correspondingly, the terminal receives the second information from the first mobility management network element. The second information indicates that the terminal is not within the service range allowed by the first PLMN.

For example, the first mobility management network element may send the second information to the terminal through the access network element. A type of the second information is, for example, a NAS message. When the location of the terminal is not within the service range allowed by the first PLMN, the first mobility management network element may further notify the terminal that the terminal is not within the service range allowed by the first PLMN. In this way, the terminal determines that the terminal location verification is not compliant.

S810: The first mobility management network element sends third information to the terminal. Correspondingly, the terminal receives the third information from the first mobility management network element. The third information indicates the terminal to enter an idle state or enter an inactive state.

For example, the first mobility management network element may send the third information to the terminal through the access network element. A type of the third information is, for example, a NAS message. When the location of the terminal is not within the service range allowed by the first PLMN, the first mobility management network element sends the third information to the terminal, so that the terminal does not access the first mobility management network element.

The first mobility management network element may perform steps S809 and S810, or the first mobility management network element may perform one of S809 and S810, or perform neither S809 nor S810. This is not limited.

In another possible design, that the first mobility management network element sends the third information to the terminal is equivalent to indicating that the terminal is not within the service range allowed by the first PLMN. In this case, sending the third information may be considered as an implementation of sending the second information (in other words, S810 may be considered as an implementation of S809). In this case, step S809 does not need to be performed.

S808 to S810 are steps that may be performed when the location of the terminal is within the service range allowed by the first PLMN. Certainly, these steps may not be performed, or some of these steps may be performed (for example, S808 is performed, S809 and S810 are performed, S810 is performed, or S808 to S810 are performed). In conclusion, S808 to S810 are all optional steps, and are shown by dashed lines in FIG. 8.

In this embodiment of this application, the first mobility management network element may perform terminal location verification based on the location of the terminal. This provides a mechanism for location verification on various terminal devices. In addition, if the terminal location verification is compliant, the first mobility management network element may directly map the corresponding cell identity based on the location of the terminal, to serve the terminal. If the terminal location verification is not compliant, the first mobility management network element may reselect a mobility management network element based on an actual location of the terminal, or directly release a connection of the terminal and/or notify the first mobility management network element to release a connection of the terminal, thereby facilitating quick network switching of the terminal.

It should be noted that the access network element (for example, the access network element in FIG. 6, FIG. 7, or FIG. 8) in the first communication method may be deployed on a satellite, or may not be deployed on a satellite. This is not specifically limited.

The following describes the second communication method provided in embodiments of this application.

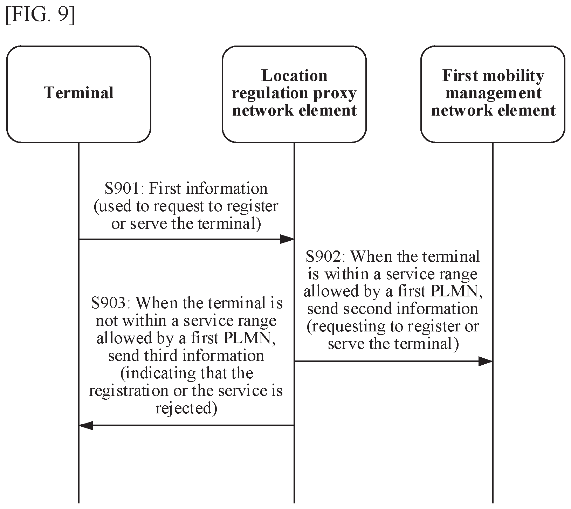

The following describes the second communication method by using an example with reference to a diagram of a communication method shown in FIG. 9. The following describes steps shown in FIG. 9.

S901: A terminal sends first information to a location regulation proxy network element. Correspondingly, the location regulation proxy network element receives the first information from the terminal. The first information is used to request to register or serve the terminal.

The terminal may directly send the first information to the location regulation proxy network element. Alternatively, the terminal may send the first information to the location regulation proxy network element through an access network element. The access network element is deployed on a first satellite. For example, the terminal sends the first information to the access network element, and if the access network element determines that a feeder link is disconnected, the access network element may directly forward the first information to the location regulation proxy network element. The first information may be a NAS message.

The first information may be carried in a registration request or a service request. For content of the registration request and the service request, refer to the foregoing content of the registration request and the service request. Details are not described herein again. Optionally, the first information may carry an identifier of the terminal. For content of the identifier of the terminal, refer to the foregoing content of the identifier of the terminal. Details are not described herein again.

S902: When the terminal is within a service range allowed by a first PLMN, the location regulation proxy network element sends second information to a first mobility management network element. Correspondingly, the first mobility management network element receives the second information from the location regulation proxy network element. The second information is used to request to register or serve the terminal. Optionally, the second information may also carry the identifier of the terminal.

The location regulation proxy network element may obtain information from another network element, and the information indicates that the terminal is within or not within the service range allowed by the first PLMN. In this way, the location regulation proxy network element can determine whether the terminal is within the service range allowed by the first PLMN. Alternatively, the location regulation proxy network element determines, based on a location of the terminal, whether the terminal is within the service range allowed by the first PLMN. For a manner in which the location regulation proxy network element determines whether the terminal is within the service range allowed by the first PLMN, refer to the content in which the second communication apparatus determines whether the terminal is within the service range allowed by the first PLMN in FIG. 6. Details are not described again. How the location regulation proxy network element obtains the location of the terminal is involved. The following describes a manner in which the location regulation proxy network element obtains the location of the terminal.

D1. The location regulation proxy network element obtains a second location of the terminal from a first location network element. In this way, the location regulation proxy network element determines, based on the second location, whether the terminal is within the service range allowed by the first PLMN.

D2. The location regulation proxy network element obtains a third location of the terminal from the access network element. In this way, the location regulation proxy network element determines, based on the third location, whether the terminal is within the service range allowed by the first PLMN. The third location is, for example, a GNSS location of the terminal.

Both the second location and the third location represent locations of the terminal, but come from different network elements. Locations specifically indicated by the second location and the third location may be a same type of location of the terminal, for example, a GNSS location, or may be different types of locations. This is not specifically limited.

When the terminal is within the service range allowed by the first PLMN, the location regulation proxy network element may directly request the first mobility management network element to register or serve the terminal, so that the first mobility management network element can register the terminal or provide a service for the terminal compliantly in time.

S903: When the terminal is not within a service range allowed by a first PLMN, the location regulation proxy network element sends third information to the terminal. Correspondingly, the terminal receives the third information from the location regulation proxy network element. The third information indicates that the registration or the service is rejected.

When the terminal is not within the service range allowed by the first PLMN, the location regulation proxy network element may directly feed back, to the terminal, that the registration or the service is rejected, so that the terminal can sense in time that terminal location verification is not compliant. Optionally, the third information further includes a cause value, and the cause value indicates that the terminal is not within the service range allowed by the first PLMN.

S902 and S903 are two possible cases. In one terminal location verification process, either step S902 or step S903 is performed.

In this embodiment of this application, the location regulation proxy network element deployed on the first satellite may directly perform terminal location verification without using a core network element, so that the terminal location verification can still be performed when the feeder link is abnormal. In addition, after determining that the terminal location verification is compliant, the location regulation proxy network element may feed back the result to the first mobility management network element in time, so that the first mobility management network element can quickly register the terminal or register a service for the terminal; or after determining that the terminal location verification is not compliant, the location regulation proxy network element may feed back the result to the terminal in time, so that the terminal performs a subsequent step in time.

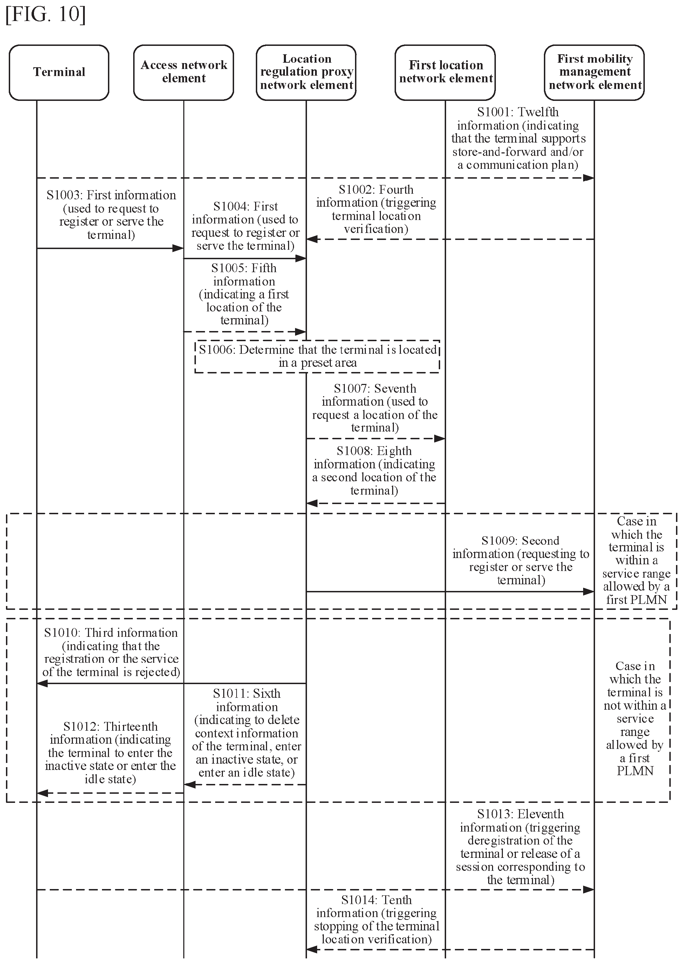

An interaction process between network elements varies with a manner in which the location regulation proxy network element obtains the location of the terminal. With reference to a diagram of a communication method shown in FIG. 10, the following describes an example of interaction between network elements in the case shown in D1 (that is, the location regulation proxy network element obtains the second location of the terminal from the first location network element). The following describes steps shown in FIG. 10.

S1001: The terminal sends twelfth information to a first mobility management network element. Correspondingly, the first mobility management network element receives the twelfth information from the terminal. The twelfth information indicates that the terminal supports store-and-forward and/or a communication plan.

That the terminal supports store-and-forward may alternatively be described as that the terminal supports a store-and-forward function (or capability), and may be understood as that the terminal has a capability to cooperate to implement store-and-forward, instead of that the terminal can perform store-and-forward. The communication plan indicates satellites that serve the terminal at different moments. The communication plan includes an identifier of at least one satellite that the terminal expects to use; or includes one or more groups of location information of the terminal and one or more groups of time information of the terminal. The one or more groups of location information indicate a location at which the terminal expects to use satellite communication, and the one or more groups of time information indicate a corresponding time at which the terminal expects to use satellite communication. Optionally, a type of the twelfth information may be a NAS message, and the twelfth information may be carried, for example, in a registration request. For content of the registration request, refer to the foregoing content of the registration request. Details are not described again.

In another possible implementation, the first mobility management network element may have determined that the terminal supports store-and-forward and/or the communication plan of the terminal, or may consider, by default, that the terminal supports the store-and-forward function. In this case, step S1001 may not need to be performed, that is, S1001 is an optional step, and is shown by a dashed line in FIG. 10.

S1002: The first mobility management network element sends fourth information to the location regulation proxy network element. Correspondingly, the location regulation proxy network element receives the fourth information from the first mobility management network element. The fourth information is used to trigger terminal location verification. Specifically, the fourth information is used to trigger the location regulation proxy network element to perform the terminal location verification.

For example, the first mobility management network element sends the fourth information to the location regulation proxy network element on a satellite (that is, an example of a first satellite) that currently serves the terminal. Alternatively, the first mobility management network element sends the fourth information to the location regulation proxy network element on a satellite (that is, an example of a first satellite) that serves the terminal next time. The satellite that serves the terminal next time may be understood as a satellite that serves the terminal in a first time period, where a start moment of the first time period is, for example, a current moment, or a satellite that serves the terminal at a next location of the terminal. The next location is different from a current location of the terminal. Optionally, the first mobility management network element may determine, based on the communication plan, the satellite that serves the terminal next time, so as to use the satellite as the first satellite. For example, if a current moment is 13:00, a satellite that serves the terminal is a satellite A, and the first mobility management network element determines, based on the communication plan, that a satellite that serves the terminal at 16:00 is a satellite B, the first mobility management network element may determine the satellite B as the first satellite.

For example, the fourth information may indicate an identifier of the terminal, and the identifier of the terminal indicates to trigger execution of the terminal location verification. Optionally, the fourth information may further indicate an identifier of a first PLMN currently serving the terminal.

In addition to triggering the execution of the terminal location verification, optionally, the fourth information may further indicate a condition for stopping the execution of the terminal location verification. For example, the fourth information includes a quantity of times of performing the terminal location verification by the location regulation proxy network element, a stop moment of performing the terminal location verification, or duration of performing the terminal location verification. For example, if the fourth information includes the quantity of times of performing the terminal location verification by the location regulation proxy network element, that is, 2, the location regulation proxy network element may actively stop the terminal location verification after performing the terminal location verification twice. If the fourth information includes the duration of performing the terminal location verification by the location regulation proxy network element, that is, 3 hours, the location regulation proxy network element may actively stop the terminal location verification 3 hours after receiving the fourth information.

In a possible design, the first mobility management network element may send the fourth information to the location regulation proxy network element when determining that a second condition is met. The second condition includes at least one of the following conditions: it is determined to provide a store-and-forward service for the terminal, the terminal supports a store-and-forward function, or the terminal has subscribed to a store-and-forward service. Optionally, the second condition may further include the first condition in FIG. 7.

For example, the first mobility management network element determines, based on the communication plan indicated by the twelfth information, whether a feeder link corresponding to the terminal is abnormal, and further determines that the terminal needs the store-and-forward service, that is, determines to provide the store-and-forward service for the terminal. For another example, the first mobility management network element determines, based on the twelfth information indicating that the terminal supports store-and-forward, that the terminal supports the store-and-forward function. For another example, the first mobility management network element may query, from a unified data repository network element, whether the terminal has subscribed to the store-and-forward service, to determine that the terminal has subscribed to the store-and-forward service.

Optionally, before performing S1002 or S1001, the first mobility management network element may establish a connection (for example, a NAS connection) to the terminal, and/or the terminal may further establish a session, or the like. This is not specifically limited.

In another possible implementation, the fourth information may be prestored in the location regulation proxy network element, or the location regulation proxy network element is preconfigured or predefined to perform the terminal location verification. In this case, the location regulation proxy network element does not need to perform step S1002, that is, S1002 is an optional step, and is shown by a dashed line in FIG. 10.

S1003: The terminal sends first information to an access network element. Correspondingly, the access network element receives the first information from the terminal. The first information is used to request to register or serve the terminal. Alternatively, the access network element may be deployed on a first satellite. The first satellite is, for example, a satellite that currently serves the terminal, or a satellite that serves the terminal next time. For content of the satellite that serves the terminal next time, refer to the content of the satellite that serves the terminal next time in S1002. Details are not described herein again.

A type of the first information is a NAS message, and the first information may be carried in a registration request or a service request. For content of the registration request and the service request, refer to the content of the registration request or the service request in FIG. 7. Details are not described again. Optionally, the first information may further indicate a first location of the terminal. The first location is, for example, a GNSS location of the terminal.

S1004: The access network element sends the first information to the location regulation proxy network element. Correspondingly, the location regulation proxy network element receives the first information from the access network element. For content of the first information, refer to the content of the first information in S1003. This is not limited.

The access network element may add the first information to an N2 interface message or an S1 interface message, and send the N2 interface message or the S1 interface message to the location regulation proxy network element. The access network element may send the first information to the location regulation proxy network element when determining that the feeder link corresponding to the terminal is abnormal, or when determining that the first condition is met. For content of the first condition, refer to the content of the first condition in FIG. 6. Details are not described again.

S1005: The access network element sends fifth information to the location regulation proxy network element. Correspondingly, the location regulation proxy network element receives the fifth information from the terminal. The fifth information indicates the first location of the terminal.

For example, the access network element may map the first location of the terminal to a cell identity, and the fifth information may include the cell identity. In this way, the fifth information indicates the first location of the terminal by using the cell identity. Alternatively, the fifth information may directly include the first location of the terminal. This is not limited.

S1006: The location regulation proxy network element determines that the terminal is located in a preset area.

For example, the location regulation proxy network element may determine, based on the first location, whether the terminal is located in the preset area. The preset area may be preconfigured or predefined in the location regulation proxy network element. The preset area may be a border area of a country or a border area of a province. This is not limited. The location regulation proxy network element may alternatively perform the terminal location verification when determining that the terminal is located in the preset area.

In another possible implementation, the location regulation proxy network element may perform the terminal location verification when receiving the fourth information. In this implementation, steps S1005 and S1006 may not need to be performed, that is, S1005 and S1006 are optional steps, and are shown by dashed lines in FIG. 10.

S1007: The location regulation proxy network element sends seventh information to the first location network element. Correspondingly, the first location network element receives the seventh information from the location regulation proxy network element. The seventh information is used to request a location of the terminal. The first location network element may also be deployed on the first satellite. For content of the first satellite, refer to the content of the first satellite in S1003. Details are not described herein again.

S1008: The first location network element sends eighth information to the location regulation proxy network element. Correspondingly, the location regulation proxy network element receives the eighth information from the first location network element. The eighth information indicates a second location of the terminal. For specific content of the second location of the terminal, refer to the foregoing content of the location of the terminal. Details are not described herein again.

The first location network element may determine the second location of the terminal based on an LCS positioning technology, for example, a multi-RTT positioning technology. For example, the first location network element may measure sending and receiving times of a signal between the access network element and the terminal, and obtain a distance between the access network element and the terminal by obtaining a signal transmission round-trip time between the access network element and the terminal, to determine the second location of the terminal. For specific content of the LCS positioning technology, refer to the foregoing related content of the LCS positioning technology. Details are not described again.

S1007 and S1008 are a manner in which the location regulation proxy network element obtains the second location of the terminal. When the location regulation proxy network element obtains the second location of the terminal in another manner, steps S1007 and S1008 do not need to be performed, that is, steps S1007 and S1008 are optional steps, and are shown by dashed lines in FIG. 10.

S1009: When the terminal is within a service range allowed by the first PLMN, the location regulation proxy network element sends second information to a first mobility management network element. Correspondingly, the first mobility management network element receives the second information from the location regulation proxy network element. The second information is used to request to register or serve the terminal. In this way, the location regulation proxy network element is equivalent to providing the store-and-forward service for the terminal, so that the first mobility management network element can determine in time that the terminal needs to be registered or served, thereby improving efficiency of accessing or serving the terminal.

For example, the location regulation proxy network element may determine, based on the second location, whether the terminal is within the service range allowed by the first PLMN. If the second location is within (or belongs to) the service range allowed by the first PLMN, it indicates that the terminal is within the service range allowed by the first PLMN. If the second location is not within (or does not belong to) the service range allowed by the first PLMN, it indicates that the terminal is not within the service range allowed by the first PLMN.

Optionally, the location regulation proxy network element may further map the second location to a cell identity, add the cell identity to the second information, and notify the first mobility management network element of the second information. In this way, the first mobility management network element can determine the second location of the terminal, and can further page the terminal in time, or the like.

S1009 may be performed when the feeder link corresponding to the terminal is restored.

S1010: When the terminal is not within a service range allowed by the first PLMN, the location regulation proxy network element sends third information to the terminal. Correspondingly, the terminal receives the third information from the location regulation proxy network element. The third information indicates that the registration or the service of the terminal is rejected.

In this way, the terminal can determine that the registration or the service of the terminal is rejected. Optionally, the third information may further carry a cause value for rejecting the registration or the service of the terminal. For example, the cause value is that the terminal is not within the service range allowed by the first PLMN.

S1009 and S1010 are two possible cases. In one terminal location verification process, either step S1009 or step S1010 is performed.

S1011: When the second location is not within the service range allowed by the first PLMN, the location regulation proxy network element sends sixth information to the access network element. Correspondingly, the access network element receives the sixth information from the location regulation proxy network element. The sixth information indicates to delete context information of the terminal, enter an inactive state, or enter an idle state.

The sixth information may be carried in the N2 interface message or the S1 interface message. This is not limited. Optionally, the sixth information indicates the terminal to enter the inactive state or enter the idle state, which is equivalent to indirectly indicating that the terminal location verification is not compliant.

When the sixth information indicates to delete (or release) the context information of the terminal, the access network element may directly delete the context information of the terminal.

S1012: When the second location is not within the service range allowed by the first PLMN, the access network element sends thirteenth information to the terminal. Correspondingly, the terminal receives the thirteenth information from the access network element. The thirteenth information indicates the terminal to enter the inactive state or enter the idle state.

When the sixth information indicates the terminal to enter the inactive state, the thirteenth information may indicate the terminal to enter the inactive state. When the sixth information indicates the terminal to enter the idle state, the thirteenth information may indicate the terminal to enter the idle state.

S1011 and S1012 are optional steps, and are shown by dashed lines in FIG. 10.

S1013: The terminal sends eleventh information to the first mobility management network element. Correspondingly, the first mobility management network element receives the eleventh information from the terminal. The eleventh information triggers deregistration of the terminal or release of the session corresponding to the terminal.

When the terminal deregisters, or the terminal determines that the store-and-forward service ends, the terminal may send the eleventh information to the first mobility management network element, to request to deregister the terminal or release the session corresponding to the terminal. In this way, a mechanism for the terminal to actively deregister is provided.

S1014: The first mobility management network element sends tenth information to the location regulation proxy network element. Correspondingly, the location regulation proxy network element receives the tenth information from the first mobility management network element. The tenth information triggers stopping of the terminal location verification.

After receiving the tenth information, the location regulation proxy network element may release (or delete) locally stored information related to the terminal location verification and/or the context information of the terminal. The information related to the terminal location verification includes, for example, the foregoing fourth information, and the context information of the terminal herein includes, for example, the second location of the terminal. The tenth information may be carried in an Np2 interface message or an Sp1 interface message. This is not limited. Optionally, the tenth information may carry an identifier of the terminal, so that the location regulation proxy network element determines a specific terminal whose location verification needs to be stopped.

Optionally, the location regulation proxy network element returns a response message to the first mobility management network element, and the response message indicates that the terminal location verification has been stopped.

S1013 and S1014 are optional steps, and are shown by dashed lines in FIG. 10.

In this embodiment of this application, when the feeder link is abnormal, the location regulation proxy network element may directly perform the terminal location verification without using a core network element. In addition, after determining that the terminal location verification is compliant, the location regulation proxy network element may feed back the result to the first mobility management network element in time, so that the first mobility management network element can quickly register the terminal or register a service for the terminal; or after determining that the terminal location verification is not compliant, the location regulation proxy network element may feed back the result to the terminal in time, so that the terminal performs a subsequent step in time. In addition, in a process of performing the terminal location verification, the location regulation proxy network element may perform positioning by using the location network element on the first satellite, so that an accurate location of the terminal can still be obtained in the positioning without using a core network. In addition, the first mobility management network element may flexibly indicate or cancel the location regulation proxy network element to perform the terminal location verification, so that the first mobility management network element or the location regulation proxy network element flexibly performs the terminal location verification, thereby improving flexibility of performing the terminal location verification.

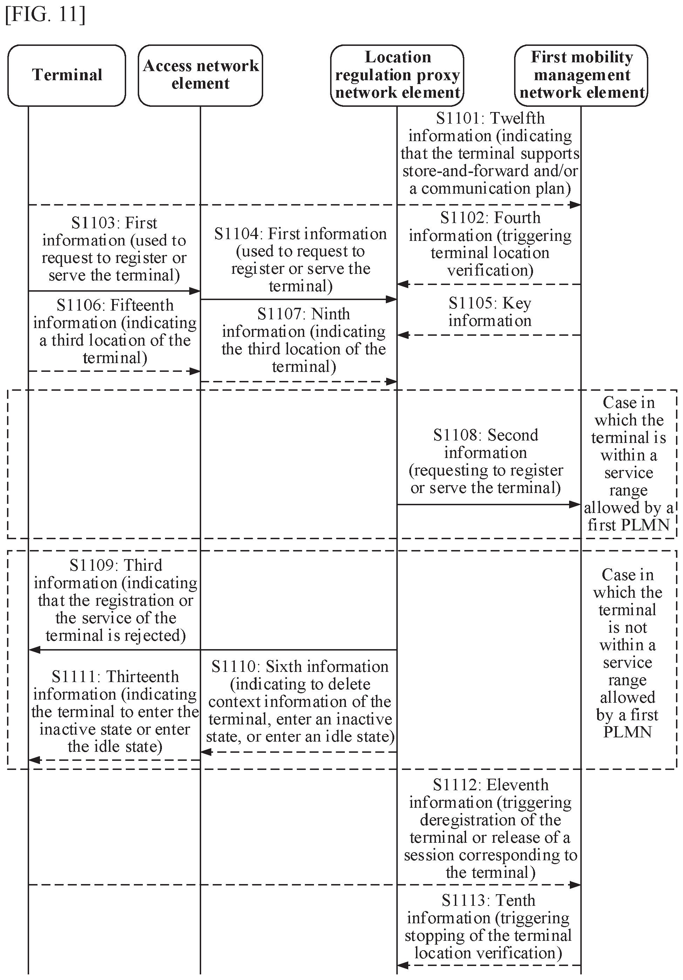

With reference to a diagram of a communication method shown in FIG. 11, the following describes an example of interaction between network elements in the case shown in D2 (that is, the location regulation proxy network element obtains the second location of the terminal from the access network element). The following describes steps shown in FIG. 11.

S1101: The terminal sends twelfth information to a first mobility management network element. Correspondingly, the first mobility management network element receives the twelfth information from the terminal. The twelfth information indicates that the terminal supports store-and-forward and/or a communication plan.

For content in which the terminal supports store-and-forward, content of the communication plan, and content of the twelfth information, refer to the content in which the terminal supports store-and-forward, the content of the communication plan, and the content of the twelfth information in FIG. 10. Details are not described again.

In another possible implementation, the first mobility management network element may have determined that the terminal supports store-and-forward and/or the communication plan of the terminal, or may consider, by default, that the terminal supports the store-and-forward function. In this case, step S1101 may not need to be performed, that is, S1101 is an optional step, and is shown by a dashed line in FIG. 11.

S1102: The first mobility management network element sends fourth information to the location regulation proxy network element. Correspondingly, the location regulation proxy network element receives the fourth information from the first mobility management network element. The fourth information is used to trigger terminal location verification.

For a manner in which the first mobility management network element determines the location regulation proxy network element, refer to the content in which the first mobility management network element determines the location regulation proxy network element in FIG. 9. Details are not described again.

In a possible design, the first mobility management network element may send the fourth information to the location regulation proxy network element when determining that a second condition is met. For content of the second condition and content in which the first mobility management network element determines that the second condition is met, refer to the content of the second condition and the content in which the first mobility management network element determines that the second condition is met in FIG. 10. Details are not described herein again.

Optionally, before performing S1102 or S1101, the first mobility management network element may establish a connection (for example, a NAS connection) to the terminal, and/or the terminal may further establish a session, or the like. This is not specifically limited.

In another possible implementation, the fourth information may be prestored in the location regulation proxy network element, or the location regulation proxy network element is preconfigured or predefined to perform the terminal location verification. In this case, the location regulation proxy network element does not need to perform step S1002, that is, S1002 is an optional step, and is shown by a dashed line in FIG. 11.

S1103: The terminal sends first information to the access network element. Correspondingly, the access network element receives the first information from the terminal. The first information is used to request to register or serve the terminal. Alternatively, the access network element may be deployed on a first satellite. The first satellite is, for example, a satellite that currently serves the terminal, or a satellite that serves the terminal next time. For content of the satellite that serves the terminal next time, refer to the content of the satellite that serves the terminal next time in S1002. Details are not described herein again.

For content of the first information, refer to the content of the first information in FIG. 9. Details are not described herein again. Optionally, the first information may further indicate a third location of the terminal. The third location is, for example, a GNSS location of the terminal.

S1104: The access network element sends the first information to the location regulation proxy network element. Correspondingly, the location regulation proxy network element receives the first information from the access network element. For content of the first information, refer to the content of the first information in S1103. This is not limited.

The access network element may add the first information to an N2 interface message or an S1 interface message, and send the N2 interface message or the S1 interface message to the location regulation proxy network element. The access network element may send the first information to the location regulation proxy network element when determining that a feeder link corresponding to the terminal is abnormal, or when determining that a first condition is met. For content of the first condition, refer to the content of the first condition in FIG. 7. Details are not described again.

S1105: The first mobility management network element sends key information to the location regulation proxy network element. Correspondingly, the location regulation proxy network element receives the key information from the first mobility management network element. The key information is key information of the terminal, and may be used to decrypt a NAS message or the like. Optionally, the first mobility management network element may further send algorithm information to the location regulation proxy network element, or algorithm information may be preconfigured or predefined in the location regulation proxy network element. The key information may be prestored in the first mobility management network element, or the key information may be obtained from a unified data repository network element or an authentication server network element. This is not specifically limited.

S1106: The terminal sends fifteenth information to the access network element. Correspondingly, the access network element receives the fifteenth information from the terminal. The fifteenth information indicates the third location of the terminal. For content of the third location of the terminal, refer to the foregoing content of the location of the terminal. The third location is, for example, the GNSS location of the terminal. The fifteenth information may be carried in the NAS message.

Optionally, the first information and the fifteenth information are carried in a same message or request, for example, a registration request or a service request. For content of the registration request and the service request, refer to the content of the registration request and the service request in FIG. 6.

S1107: The access network element sends ninth information to the location regulation proxy network element. Correspondingly, the location regulation proxy network element receives the ninth information from the access network element. The ninth information indicates the third location of the terminal.

Optionally, the ninth information and the first information may be carried in a same message or request, for example, the NAS message.

In this way, the location regulation proxy network element can decrypt the ninth information based on the key information, to determine the third location of the terminal. That is, in this case, although the ninth information indicates a location of the terminal, the location of the terminal is indicated in a ciphertext manner. In this way, security of the location of the terminal can be ensured. Alternatively, the key is prestored in the location regulation proxy network element, or the ninth information does not need to be decrypted. In this case, step S1105 does not need to be performed, that is, S1105 is an optional step.

Optionally, the access network element may map the third location of the terminal to a cell identity, and the fifth information may include the cell identity. In this way, the fifth information indicates the third location of the terminal by using the cell identity. Alternatively, the fifth information may directly include the third location of the terminal. This is not limited. In this case, the third location may be equivalent to the foregoing first location.

In a possible implementation, the location regulation proxy network element determines that the terminal is located in a preset area.

For example, the location regulation proxy network element may determine, based on the third location, whether the terminal is located in the preset area. For content of the preset area, refer to the content of the preset area in FIG. 11.

S1108: When the terminal is within a service range allowed by a first PLMN, the location regulation proxy network element sends second information to the first mobility management network element. Correspondingly, the first mobility management network element receives the second information from the location regulation proxy network element. The second information is used to request to register or serve the terminal. In this way, the location regulation proxy network element is equivalent to providing the store-and-forward service for the terminal, so that the first mobility management network element can determine in time that the terminal needs to be registered or served, thereby improving efficiency of accessing or serving the terminal.

For example, the location regulation proxy network element may determine, based on the third location, whether the terminal is within the service range allowed by the first PLMN. If the third location is within (or belongs to) the service range allowed by the first PLMN, it indicates that the terminal is within the service range allowed by the first PLMN. If the third location is not within (or does not belong to) the service range allowed by the first PLMN, it indicates that the terminal is not within the service range allowed by the first PLMN.

Optionally, the location regulation proxy network element may further map the third location to a cell identity, or obtain a cell identity from the access network element, add the cell identity to the second information, and notify the first mobility management network element of the second information. In this way, the first mobility management network element can determine the third location of the terminal, and can further page the terminal in time, or the like.

S1109: When the terminal is not within a service range allowed by a first PLMN, the location regulation proxy network element sends third information to the terminal. Correspondingly, the terminal receives the third information from the location regulation proxy network element. The third information indicates that the registration or the service of the terminal is rejected.

In this way, the terminal can determine that the registration or the service of the terminal is rejected. Optionally, the third information may further carry a cause value for rejecting the registration or the service of the terminal. For example, the cause value is that the terminal is not within the service range allowed by the first PLMN.

S1108 and S1109 are two possible cases. In one terminal location verification process, either step S1108 or step S1109 is performed.

S1110: When the terminal is not within the service range allowed by the first PLMN, the location regulation proxy network element sends sixth information to the access network element. Correspondingly, the access network element receives the sixth information from the location regulation proxy network element. The sixth information indicates to delete context information of the terminal, enter an inactive state, or enter an idle state.

For content of the sixth information, refer to the content of the sixth information in FIG. 10. Details are not described herein again. When the sixth information indicates to delete (or release) the context information of the terminal, the access network element may directly delete the context information of the terminal.

S1111: When the terminal is not within the service range allowed by the first PLMN, the access network element sends thirteenth information to the terminal. Correspondingly, the terminal receives the thirteenth information from the access network element. The thirteenth information indicates the terminal to enter an inactive state or enter an idle state.

When the sixth information indicates the terminal to enter the inactive state, the thirteenth information may indicate the terminal to enter the inactive state. When the sixth information indicates the terminal to enter the idle state, the thirteenth information may indicate the terminal to enter the idle state.

S1110 and S1111 are steps that may be performed when the second location is not within the service range allowed by the first PLMN. These steps may alternatively not be performed, that is, S1110 and S1111 are optional steps, and are shown by dashed lines in FIG. 11.

S1112: The terminal sends eleventh information to the first mobility management network element. Correspondingly, the first mobility management network element receives the eleventh information from the terminal. The eleventh information triggers deregistration of the terminal or release of the session corresponding to the terminal.

When the terminal deregisters, or the terminal determines that the store-and-forward service ends, the terminal may send the eleventh information to the first mobility management network element, to request to deregister the terminal or release the session corresponding to the terminal. In this way, a mechanism for the terminal to actively deregister is provided.

S1113: The first mobility management network element sends tenth information to the location regulation proxy network element. Correspondingly, the location regulation proxy network element receives the tenth information from the first mobility management network element. The tenth information triggers stopping of the terminal location verification.

After receiving the tenth information, the location regulation proxy network element may release (or delete) locally stored information related to the terminal location verification and/or the context information of the terminal. The information related to the terminal location verification includes, for example, the foregoing fourth information, and the context information of the terminal herein includes, for example, the second location of the terminal. The tenth information may be carried in an Np2 interface message or an Sp1 interface message. This is not limited. Optionally, the tenth information may carry an identifier of the terminal.

Optionally, the location regulation proxy network element returns a response message to the first mobility management network element, and the response message indicates that the terminal location verification has been stopped.

S1112 and S1113 are optional steps, and are shown by dashed lines in FIG. 11.

In this embodiment of this application, when the feeder link is abnormal, the location regulation proxy network element may directly perform the terminal location verification without using a core network element. In addition, in a process of performing the terminal location verification, the access network element may indicate the third location of the terminal to the location regulation proxy network element, so that the location regulation proxy network element can perform the terminal location verification based on the third location. In addition, the location regulation proxy network element may obtain the key information from the first mobility management network element, to obtain the third location of the terminal through decryption, thereby ensuring information security of the terminal when the terminal location verification is implemented. In addition, the first mobility management network element may flexibly indicate or cancel the location regulation proxy network element to perform the terminal location verification, so that the first mobility management network element or the location regulation proxy network element flexibly performs the terminal location verification, thereby improving flexibility of performing the terminal location verification.

The following describes the third communication method provided in embodiments of this application.

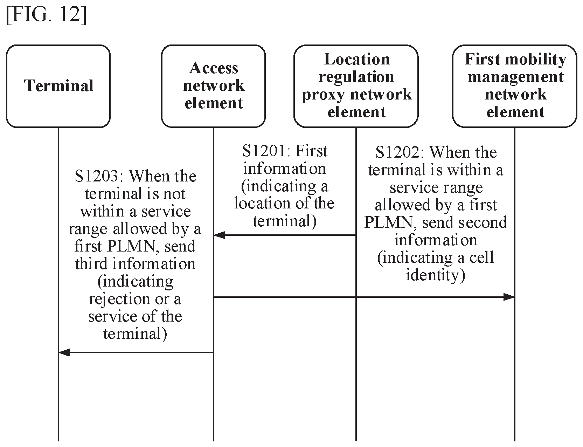

The following describes the third communication method by using an example with reference to a diagram of a communication method shown in FIG. 12. The following describes steps shown in FIG. 12.

S1201: A location regulation proxy network element sends first information to an access network element. The first information indicates a location of a terminal.

For the location of the terminal, refer to the foregoing content of the location of the terminal. For a manner in which the first information indicates the location of the terminal, refer to the content in which the first information indicates the location of the terminal in FIG. 6. Details are not described again.

In a possible implementation, the location regulation network element determines whether the location of the terminal is within a service range allowed by a first PLMN. For a manner in which the location regulation proxy network element determines whether the location of the terminal is within the service range allowed by the first PLMN, refer to the content in which the second communication apparatus determines whether the location of the terminal is within the service range allowed by the first PLMN in FIG. 6. Details are not described again. Further, the location regulation proxy network element further indicates, by using the first information, that the terminal is within the service range allowed by the first PLMN, or the terminal is not within the service range allowed by the first PLMN.

S1202: When the terminal is within the service range allowed by the first PLMN, the access network element sends second information to a first mobility management network element. Correspondingly, the first mobility management network element receives the second information from the access network element. The second information indicates a cell identity.

If the first information further indicates that the terminal is within the service range allowed by the first PLMN, or the terminal is not within the service range allowed by the first PLMN, the access network element may determine, based on the first information, whether the terminal is within the service range allowed by the first PLMN. Alternatively, the access network element may determine, based on the location of the terminal indicated by the first information, whether the terminal is within the service range allowed by the first PLMN. For a manner in which the access network element determines whether the terminal is within the service range allowed by the first PLMN, refer to the content in which the second communication apparatus determines whether the location of the terminal is within the service range allowed by the first PLMN in FIG. 6. Details are not described again.

For a manner in which the access network element determines the cell identity and content of the cell identity, refer to the content in which the access network element determines the cell identity and the content of the cell identity in FIG. 6. Details are not described again.

S1203: When the terminal is not within the service range allowed by the first PLMN, the access network element sends third information to the terminal. Correspondingly, the terminal receives the third information from the access network element. The third information indicates that registration or a service of the terminal is rejected. Optionally, the third information may include a cause value for rejecting the registration or the service of the terminal. For example, the cause value indicates that the terminal is not within the service range allowed by the first PLMN.

In this embodiment of this application, the access network element performs terminal location verification, or determines a terminal location verification result based on the location regulation proxy network element deployed on a first satellite, without using a core network element. Therefore, the method is applicable to performing terminal location verification when a feeder link is abnormal.

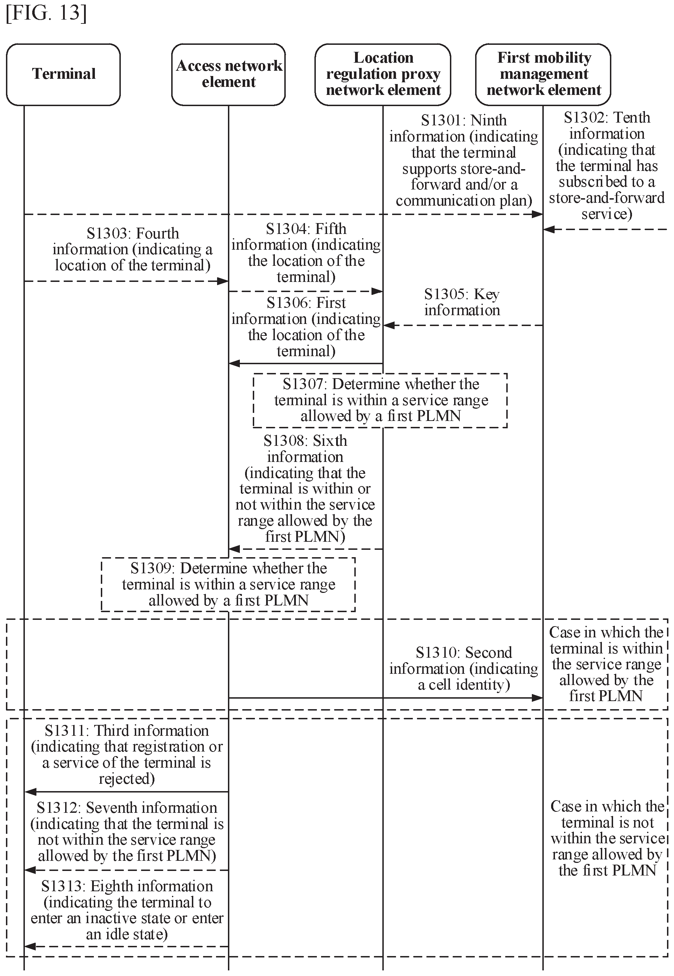

The following describes an example of interaction between network elements in FIG. 12 with reference to a diagram of a method shown in FIG. 13. The following describes steps shown in FIG. 13.

S1301: A terminal sends ninth information to a first mobility management network element. Correspondingly, the first mobility management network element receives the ninth information from the terminal. The ninth information indicates that the terminal supports store-and-forward and/or a communication plan. For content in which the terminal supports store-and-forward, content of the communication plan, and content of the ninth information, refer to the content in which the terminal supports store-and-forward, the content of the communication plan, and the content of the twelfth information in FIG. 9. Details are not described again.

S1302: A unified data repository network element sends tenth information to the first mobility management network element. Correspondingly, the first mobility management network element receives the tenth information from the unified data repository network element. The tenth information indicates that the terminal has subscribed to a store-and-forward service.

One of S1301 and S1302 may be performed, or both of S1301 and S1302 are performed, or neither of S1301 and S1302 is performed. This is not limited. S1301 and S1302 are optional steps, and are shown by dashed lines in FIG. 13.

S1303: The terminal sends fourth information to an access network element. Correspondingly, the access network element receives the fourth information from the terminal. The fourth information indicates a location of the terminal. The location of the terminal may be a GNSS location of the terminal.

The fourth information may be carried, for example, in a NAS message. In addition to carrying the location of the terminal, the fourth information may further request to register or serve the terminal. In other words, the fourth information may be carried in a registration request or a service request.

S1304: The access network element sends fifth information to a location regulation proxy network element. Correspondingly, the location regulation proxy network element receives the fifth information from the access network element. The fifth information indicates the location of the terminal. Optionally, the access network element adds the fifth information to an N2 interface message or an S1 interface message.

S1303 to S1305 are a manner in which the location regulation proxy network element obtains the location of the terminal, and a manner in which the location regulation proxy network element obtains the location of the terminal is actually not limited. That is, S1303 to S1305 are optional steps, and are shown by dashed lines in FIG. 13.

S1305: The first mobility management network element sends key information to the location regulation proxy network element. Correspondingly, the location regulation proxy network element receives the key information from the first mobility management network element.

For a manner in which the first mobility management network element obtains the key information, refer to the content of obtaining the key information in FIG. 10. Details are not described again. For content of the key information, refer to the content of the key information in FIG. 10. Details are not described again. Optionally, the first mobility management network element may further send algorithm information to the location regulation proxy network element. For content of the algorithm information, refer to the foregoing content of the algorithm information. Details are not described again.

For example, after receiving the fifth information, the location regulation proxy network element may decrypt the fifth information based on the key information, to obtain the location of the terminal.

Optionally, in addition to sending the key information to the location regulation proxy network element, the first mobility management network element may further indicate to trigger the location regulation proxy network element to perform terminal location verification. In this way, the location regulation proxy network element is pushed to perform the terminal location verification.

In another possible design, if the key information is prestored in the location regulation proxy network element, or the fifth information does not need to be decrypted, step S1305 may not be performed.

S1306: The location regulation proxy network element sends first information to the access network element. Correspondingly, the access network element receives the first information from the location regulation proxy network element. The first information indicates the location of the terminal.

S1305 and S1306 may be used as an independent embodiment. This provides a mechanism for obtaining the location of the terminal by the access network element.

S1307: The location regulation proxy network element determines whether the terminal is within a service range allowed by a first PLMN.

For a manner in which the location regulation proxy network element determines whether the terminal is within the service range allowed by the first PLMN, refer to the content in which the second communication apparatus determines whether the terminal is within the service range allowed by the first PLMN in FIG. 6. Details are not described herein again. If the location of the terminal is within the service range allowed by the first PLMN, the location regulation proxy network element determines that the terminal is within the service range allowed by the first PLMN. If the location of the terminal is not within the service range allowed by the first PLMN, the location regulation proxy network element determines that the terminal is not within the service range allowed by the first PLMN.

S1308: The location regulation proxy network element sends sixth information to the access network element. Correspondingly, the access network element receives the sixth information from the location regulation proxy network element. The sixth information indicates that the terminal is within or not within the service range allowed by the first PLMN. Specifically, the sixth information indicates that the terminal is within the service range allowed by the first PLMN, or the terminal is not within the service range allowed by the first PLMN.

S1309: The access network element determines whether the terminal is within a service range allowed by a first PLMN.

For example, the access network element may determine, based on the location of the terminal indicated by the first information, whether the terminal is within the service range allowed by the first PLMN. For a manner in which the access network element determines whether the terminal is within the service range allowed by the first PLMN, refer to the content in which the location regulation proxy network element determines whether the terminal is within the service range allowed by the first PLMN in S1306. Details are not described again.

S1308 and S1309 are a manner 2 in which the access network element determines that the location of the terminal is within or not within the service range allowed by the first PLMN. In an actual execution process, only steps S1307 and S1308 may be performed, or only step S1309 may be performed. Therefore, one of S1307 and S1309 may be an optional step, and the two steps are shown by dashed lines in FIG. 13. Alternatively, when the first information indicates that the location of the terminal (or the terminal) is within or not within the service range allowed by the first PLMN, step S1309 may be performed. In this way, it is equivalent to that terminal location verification is performed twice, thereby improving verification reliability.

S1310: When the terminal is within the service range allowed by the first PLMN, the access network element sends second information to the first mobility management network element. Correspondingly, the first mobility management network element receives the second information from the access network element. The second information indicates a cell identity.

The access network element may determine, based on the location of the terminal indicated by the first information, the cell identity corresponding to the location of the terminal. For a manner in which the access network element determines the cell identity and content of the cell identity, refer to the content in which the access network element determines the cell identity and the content of the cell identity in FIG. 6. Details are not described again.

S1311: When the terminal is not within the service range allowed by the first PLMN, the access network element sends third information to the terminal. Correspondingly, the terminal receives the third information from the access network element. The third information indicates that the registration or the service of the terminal is rejected.

S1310 and S1311 are two possible cases. In one terminal location verification process, either step S1310 or step S1311 is performed.

S1312: When the terminal is not within the service range allowed by the first PLMN, the access network element sends seventh information to the terminal. Correspondingly, the terminal receives the seventh information from the access network element. The seventh information indicates that the terminal is not within the service range allowed by the first PLMN.

S1313: When the terminal is not within the service range allowed by the first PLMN, the access network element sends eighth information to the terminal. Correspondingly, the terminal receives the eighth information from the access network element. The eighth information indicates the terminal to enter an inactive state or enter an idle state.

For example, the eighth information may include an identifier of the terminal, and the identifier of the terminal indicates the terminal to enter the inactive state or the idle state.

In a possible design, the access network element may further determine the cell identity corresponding to the location of the terminal, determine a second mobility management network element corresponding to the location of the terminal, and send the cell identity to the second mobility management network element. For content of determining the cell identity and determining the second mobility management network element, refer to the content of determining the cell identity and determining the second mobility management network element in FIG. 7. Details are not described herein again.

S1312 and S1313 are optional steps, and are shown by dashed lines in FIG. 13.

In this embodiment of this application, when a feeder link is abnormal, the location regulation proxy network element may perform the terminal location verification without using a core network element, or the location regulation proxy network element may obtain the location of the terminal, and indicate the location of the terminal to the access network element, so that the access network element performs the terminal location verification. In addition, the location regulation proxy network element may obtain the key information from the first mobility management network element, to obtain the third location of the terminal through decryption, thereby ensuring information security of the terminal when the terminal location verification is implemented.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

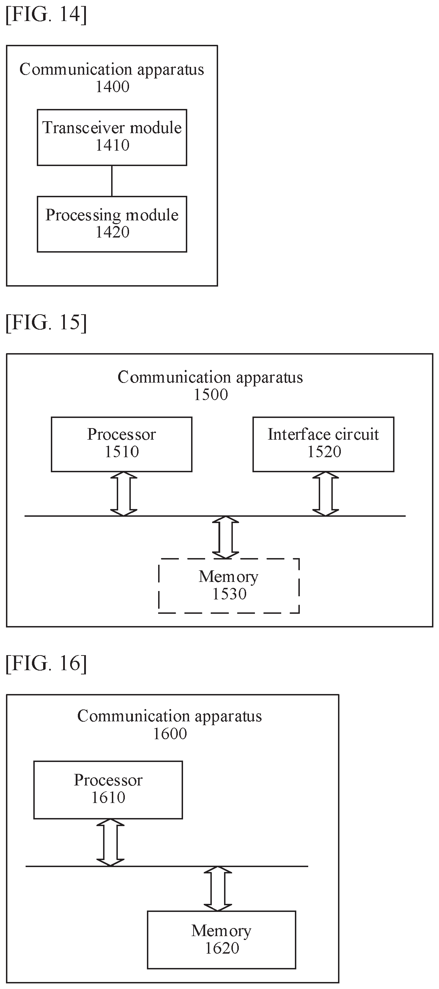

An embodiment of this application provides a communication apparatus. FIG. 14 is a diagram of a structure of the communication apparatus. The communication apparatus may be configured to implement functions of the access network element, the first mobility management network element, the location regulation proxy network element, or the terminal in the foregoing method embodiments, and therefore can also implement beneficial effects of the foregoing method embodiments. In this embodiment of this application, the communication apparatus may be the RAN in FIG. 1, the RAN in FIG. 2, the access network element in FIG. 5, the first mobility management network element in FIG. 5, the terminal in any one of FIG. 1 to FIG. 4 or FIG. 5, the LRP in FIG. 5, or the like, or may be a software module or a hardware module (such as a chip) used in the terminal, the access network element, the first mobility management network element, or the location regulation proxy network element.

As shown in FIG. 14, the communication apparatus 1400 includes a transceiver module 1410 and a processing module 1420. The communication apparatus 1400 may be configured to implement functions of the access network element, the first mobility management network element, the location regulation proxy network element, or the terminal in any one of FIG. 6 to FIG. 13.

In a first embodiment, the communication apparatus 1400 may be configured to implement functions of the first communication apparatus in FIG. 6.

For example, the transceiver module 1410 is configured to receive first information. The transceiver module 1410 is further configured to send a cell identity to a first mobility management network element, or send a cell identity to a second mobility management network element.

Optionally, the communication apparatus 1400 may be further configured to implement other steps performed by the first communication apparatus in FIG. 6. Details are not described herein again.

In a possible implementation, the communication apparatus 1400 may be configured to implement functions of the access network element in FIG. 7.

For example, the transceiver module 1410 is configured to receive first information. The transceiver module 1410 is further configured to send a cell identity to a first mobility management network element, or send a cell identity to a second mobility management network element.

Optionally, the communication apparatus 1400 may further implement other steps performed by the access network element in FIG. 7. Details are not described herein again.

In another possible implementation, the communication apparatus 1400 may be configured to implement functions of the first mobility management network element in FIG. 8.

For example, the transceiver module 1410 is configured to: receive first information, and send a cell identity to a second mobility management network element.

Optionally, the communication apparatus 1400 may further implement other steps performed by the first mobility management network element in FIG. 8. Details are not described herein again.

In a second embodiment, the communication apparatus 1400 may be configured to implement functions of the second communication apparatus in FIG. 6.

For example, the transceiver module 1410 is configured to send first information to a first communication apparatus.

Optionally, the communication apparatus 1400 may further implement other steps performed by the second communication apparatus in FIG. 6. Details are not described herein again.

In a possible implementation, the communication apparatus 1400 may be configured to implement functions of the first mobility management network element in FIG. 7.

For example, the transceiver module 1410 is configured to send first information to an access network element. Optionally, the transceiver module 1410 may be further configured to receive a cell identity from the access network element.

Optionally, the communication apparatus 1400 may further implement other steps performed by the first mobility management network element in FIG. 7. Details are not described herein again.

In another possible implementation, the communication apparatus 1400 may be configured to implement functions of the access network element in FIG. 8.

For example, the transceiver module 1410 is configured to send first information to a first mobility management network element.

Optionally, the communication apparatus 1400 may further implement other steps performed by the access network element in FIG. 8. Details are not described herein again.

In a third embodiment, the communication apparatus 1400 may be configured to implement functions of the location regulation proxy network element in FIG. 9.

For example, the transceiver module 1410 is configured to: receive first information, and send second information or third information.

Optionally, the communication apparatus 1400 may further implement other steps performed by the location regulation proxy network element in FIG. 9. Details are not described herein again.

In a possible implementation, the communication apparatus 1400 may be configured to implement functions of the location regulation proxy network element in FIG. 10.

For example, the transceiver module 1410 is configured to: receive first information, and send second information or third information.

Optionally, the communication apparatus 1400 may further implement other steps performed by the location regulation proxy network element in FIG. 10. Details are not described herein again.

In another possible implementation, the communication apparatus 1400 may be configured to implement functions of the location regulation proxy network element in FIG. 11.

For example, the transceiver module 1410 is configured to: receive first information, and send second information or third information.

Optionally, the communication apparatus 1400 may further implement other steps performed by the location regulation proxy network element in FIG. 11. Details are not described herein again.

In a fourth embodiment, the communication apparatus 1400 may be configured to implement functions of the first mobility management network element in FIG. 9.

For example, the transceiver module 1410 is configured to receive second information.

Optionally, the communication apparatus 1400 may further implement other steps performed by the first mobility management network element in FIG. 9. Details are not described herein again.

In a possible implementation, the communication apparatus 1400 may be configured to implement functions of the first mobility management network element in FIG. 10.

For example, the transceiver module 1410 is configured to receive second information. Optionally, the first mobility management network element sends fourth information and the like.

Optionally, the communication apparatus 1400 may further implement other steps performed by the first mobility management network element in FIG. 10. Details are not described herein again.

In another possible implementation, the communication apparatus 1400 may be configured to implement functions of the first mobility management network element in FIG. 11.

For example, the transceiver module 1410 is configured to receive second information. Optionally, the first mobility management network element sends fourth information or key information, and the like.

Optionally, the communication apparatus 1400 may further implement other steps performed by the first mobility management network element in FIG. 11. Details are not described herein again.

In a fifth embodiment, the communication apparatus 1400 may be configured to implement functions of the access network element in FIG. 12.

For example, the transceiver module 1410 is configured to: receive first information, and send second information or third information.

Optionally, the communication apparatus 1400 may further implement other steps performed by the access network element in FIG. 12. Details are not described herein again.

In a possible implementation, the communication apparatus 1400 may implement functions of the access network element in FIG. 13.

For example, the transceiver module 1410 is configured to: receive first information, and send second information or third information.

Optionally, the communication apparatus 1400 may further implement other steps performed by the access network element in FIG. 13. Details are not described herein again.

In a sixth embodiment, the communication apparatus 1400 may be configured to implement functions of the first mobility management network element in FIG. 13.

For example, the transceiver module 1410 is configured to: send key information, and receive second information under control of the processing module 1420.

Optionally, the communication apparatus 1400 may further implement other steps performed by the first mobility management network element in FIG. 13. Details are not described herein again.

In a seventh embodiment, the communication apparatus 1400 may be configured to implement functions of the first mobility management network element in FIG. 13.

For example, the transceiver module 1410 is configured to: send key information, and receive second information under control of the processing module 1420.

Optionally, the communication apparatus 1400 may further implement other steps performed by the first mobility management network element in FIG. 11. Details are not described herein again.

In an eighth embodiment, the communication apparatus 1400 may be configured to implement functions of the location regulation proxy network element in FIG. 13.

For example, the transceiver module 1410 is configured to receive key information, the processing module 1420 is configured to decrypt fifth information to obtain a location of a terminal, and the transceiver module 1410 is configured to send first information to an access network element.

Optionally, the communication apparatus 1400 may further implement other steps performed by the location regulation proxy network element in FIG. 13. Details are not described herein again.

In a ninth embodiment, the communication apparatus 1400 may be configured to implement functions of the terminal device in FIG. 13.

For example, the transceiver module 1410 is configured to: send ninth information, and receive third information under control of the processing module 1420.

Optionally, the communication apparatus 1400 may further implement other steps performed by the terminal in FIG. 13. Details are not described herein again.

For more detailed descriptions of the transceiver module 1410 and the processing module 1420, directly refer to the related descriptions in the method embodiment shown in any one of FIG. 6 to FIG. 13. Details are not described herein again.

An embodiment of this application provides a communication apparatus. FIG. 15 is a diagram of a structure of the communication apparatus. As shown in FIG. 15, the communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to store instructions executed by the processor 1510, store input data that the processor 1510 needs to run instructions, or store data generated after the processor 1510 runs instructions.

When the communication apparatus 1500 is configured to implement the method shown in any one of FIG. 6 to FIG. 13, the processor 1510 is configured to implement functions of the processing module 1420, and the interface circuit 1520 is configured to implement functions of the transceiver module 1410.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a network element (for example, an access network element, a location regulation proxy network element, or a mobility management network element), the module in the network element implements functions of the network element in the foregoing method embodiments. The module in the network element receives information from another module (for example, a radio frequency module or an antenna) in the network element, where the information is sent by a terminal to the network element; or the module in the network element sends information to another module (for example, a radio frequency module or an antenna) in the network element, where the information is sent by the network element to a terminal. The module in the access network element herein may be a baseband chip of the access network element, or may be a DU or another module. The DU herein may be a DU in an open radio access network (open radio access network, O-RAN) architecture.

An embodiment of this application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes one processor and one memory. As shown in FIG. 16, the communication apparatus 1600 includes one processor 1610 and one memory 1620. The processor 1610 is coupled to the memory 1620. The memory 1620 stores instructions. When the instructions stored in the memory 1620 are executed by the processor 1610, the communication apparatus 1600 performs the method in any one of FIG. 6 to FIG. 13.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like. The memory in embodiments of this application may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid-state drive (solid-state drive, SSD).

An embodiment of this application provides a communication system. The communication system may be configured to perform the method in any one of FIG. 6 to FIG. 13.

For example, if the communication system is configured to implement the method in FIG. 6, the communication system includes a first communication apparatus and a second communication apparatus. Optionally, the communication system further includes at least one of a terminal and/or a second mobility management network element. For content of the first communication apparatus, the second communication apparatus, the first mobility management network element, and the second mobility management network element, refer to the content described in FIG. 6. Details are not described herein again.

For example, if the communication system is configured to implement the method in FIG. 7, the communication system includes an access network element. Optionally, the communication system further includes at least one of a terminal, a first mobility management network element, or a second mobility management network element. For content of the access network element, the terminal, the first mobility management network element, and the second mobility management network element, refer to the content described in FIG. 7. Details are not described herein again.

Alternatively, if the communication system is configured to implement the method in FIG. 8, the communication system includes a first mobility management network element. Optionally, the communication system further includes at least one of a terminal, an access network element, a location regulation proxy network element, or a second mobility management network element. For content of the access network element, the terminal, the first mobility management network element, the location regulation proxy network element, and the second mobility management network element, refer to the content described in FIG. 8. Details are not described herein again.

Alternatively, if the communication system is configured to implement the method in FIG. 9, FIG. 10, or FIG. 11, the communication system includes a location regulation proxy network element. Optionally, the communication system further includes at least one of a terminal, a first mobility management network element, an access network element, or a second mobility management network element. For content of the access network element, the terminal, the first mobility management network element, the location regulation proxy network element, and the second mobility management network element, refer to the content described in FIG. 9, FIG. 10, or FIG. 11. Details are not described herein again.

Alternatively, if the communication system is configured to implement the method in FIG. 12 or FIG. 13, the communication system includes an access network element. Optionally, the communication system further includes at least one of a terminal, a first mobility management network element, a location regulation proxy network element, or a second mobility management network element. For content of the access network element, the terminal, the first mobility management network element, the location regulation proxy network element, and the second mobility management network element, refer to the content described in FIG. 12 or FIG. 13. Details are not described herein again.

An embodiment of this application provides a chip system. The chip system includes a processor and an interface. The processor is configured to invoke instructions from the interface and run the instructions. When the processor executes the instructions, the method in any one of FIG. 6 to FIG. 13 is implemented.

An embodiment of this application provides a computer-readable storage medium. The computer-readable storage medium is configured to store a computer program or instructions. When the computer program or the instructions are run, the method in any one of FIG. 6 to FIG. 13 is implemented.

An embodiment of this application provides a computer program product including instructions. When the computer program product runs on a computer, the method in any one of FIG. 6 to FIG. 13 is implemented.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first communication apparatus, wherein the method comprises:
receiving first information from a second communication apparatus, wherein the first information indicates a location of a terminal; and the first communication apparatus is a first mobility management network element, and the second communication apparatus is the terminal; or the first communication apparatus is an access network element, and the second communication apparatus is the first mobility management network element; and
if the location of the terminal is within a service range allowed by a first public land mobile network, sending a cell identity corresponding to the location to the first mobility management apparatus; or
if the location of the terminal is not within a service range allowed by a first public land mobile network, sending a cell identity corresponding to the location to a second mobility management apparatus, wherein the second mobility management apparatus belongs to a second public land mobile network, and the location of the terminal is within a service range allowed by the second public land mobile network, wherein
the first public land mobile network currently serves the terminal.

2. The method according to claim 1, wherein the method further comprises:
determining whether the location of the terminal is within the service range allowed by the first public land mobile network.

3. The method according to claim 1 or 2, wherein the first information further indicates:
the location of the terminal is not within the service range allowed by the first public land mobile network; or
the location of the terminal is within the service range allowed by the first public land mobile network.

4. The method according to any one of claims 1 to 3, wherein
when the first communication apparatus is the first mobility management network element, and the second communication apparatus is the terminal, the first information is carried in a non-access stratum message; or
when the first communication apparatus is the access network element, and the second communication apparatus is the mobility management network element, the first information is carried in an N2 interface message or an S1 interface message.

5. The method according to any one of claims 1 to 4, wherein the method further comprises:
sending second information to the terminal, wherein the second information indicates that the terminal is not within the service range allowed by the first public land mobile network.

6. The method according to any one of claims 1 to 5, wherein the method further comprises:
when the terminal is not within the service range of the first public land mobile network, sending third information to the terminal, wherein the third information indicates one of the following:
the terminal to enter an idle state; or
the terminal to enter an inactive state.

7. The method according to any one of claims 1 to 6, wherein the location of the terminal is a global navigation satellite system GNSS location of the terminal.

8. A communication method, applied to a first mobility management network element, wherein the method comprises:
receiving fourth information from a terminal, wherein the fourth information indicates a location of the terminal; and
sending first information to an access network element, wherein the first information indicates the location of the terminal.

9. The method according to claim 8, wherein the method further comprises at least one of the following:
determining that a type of the terminal is a first type;
determining that an access type used by the terminal is satellite access;
determining that the access network element supports the terminal location verification; or
deploying the access network element on a first satellite.

10. The method according to claim 7 or 8, wherein the location of the terminal is a global navigation satellite system GNSS location of the terminal.

11. A communication method, applied to a location regulation proxy network element, wherein the location regulation proxy network element is deployed on a first satellite, and the method comprises:
receiving first information from a terminal, wherein the first information is used to request to register or serve the terminal; and
if the terminal is within a service range allowed by a first public land mobile network, sending second information to a first mobility management network element based on the first information, wherein the second information requests to register or serve the terminal, and the first mobility management network element belongs to the first public land mobile network and currently serves the terminal; or
if the terminal is not within a service range allowed by a first public land mobile network, sending third information to the terminal, wherein the third information indicates that the registration or the service is rejected, wherein
the first public land mobile network currently serves the terminal.

12. The method according to claim 11, wherein the method further comprises:
receiving fourth information from the first mobility management network element, wherein the fourth information is used to trigger the location regulation proxy network element to perform the terminal location verification, and the first mobility management network element belongs to the first public land mobile network and currently serves the terminal.

13. The method according to claim 12, wherein
the fourth information comprises an identifier of the terminal; or
the fourth information comprises an identifier of the terminal and an identifier of the first public land mobile network.

14. The method according to any one of claims 11 to 13, wherein
the first satellite is a current serving satellite of the terminal; or
the first satellite is a satellite that provides a service for the terminal next time.

15. The method according to any one of claims 11 to 14, wherein the method further comprises:
receiving fifth information from an access network element, wherein the fifth information indicates a first location of the terminal; and
determining, based on the fifth information, that the terminal is located in a preset area.

16. The method according to any one of claims 11 to 15, wherein the method further comprises:
sending sixth information to the access network element, wherein the sixth information further indicates one of the following:
to delete context information of the terminal;
the terminal to enter an inactive state; or
the terminal to enter an idle state.

17. The method according to any one of claims 11 to 16, wherein the method further comprises:
sending seventh information to a first location network element, wherein the seventh information is used to request a location of the terminal, and the first location network element is deployed on the first satellite;
receiving eighth information from the first location network element, wherein the eighth information indicates a second location of the terminal; and
determining, based on the second location, whether the terminal is within the service range allowed by the first public land mobile network.

18. The method according to any one of claims 11 to 16, wherein the method further comprises:
receiving ninth information from the access network element, wherein the ninth information indicates a third location of the terminal; and
determining, based on the third location, whether the terminal is within the service range allowed by the first public land mobile network.

19. The method according to claim 18, wherein the method further comprises:
receiving key information from the first mobility management network element; and
decrypting the ninth information based on the key information, to obtain the third location of the terminal.

20. The method according to claim 18 or 19, wherein the method further comprises:
when the terminal is within the service range allowed by the first public land mobile network, sending a cell identity corresponding to the third location to the first mobility management network element.

21. The method according to any one of claims 18 to 20, wherein the third location is a GNSS location of the terminal.

22. The method according to any one of claims 11 to 21, wherein the method further comprises:
receiving tenth information, wherein the tenth information is used to trigger stopping of the terminal location verification; and
stopping the terminal location verification based on the tenth information.

23. A communication method, applied to a first mobility management network element, wherein the method comprises:
determining to provide a store-and-forward service for a terminal, wherein the terminal supports a store-and-forward function, or the terminal has subscribed to the store-and-forward service; and
sending fourth information to a location regulation proxy network element, wherein the fourth information is used to trigger the location regulation proxy network element to perform terminal location verification, and the location regulation proxy network element is deployed on a first satellite.

24. The method according to claim 23, wherein the method further comprises:
receiving second information from the location regulation proxy network element, wherein the second information requests to register or serve the terminal.

25. The method according to claim 23 or 24, wherein the method further comprises:
receiving eleventh information from the terminal, wherein the eleventh information triggers deregistration of the terminal or release of a session corresponding to the terminal; and
sending tenth information to the location regulation proxy network element based on the eleventh information, wherein the tenth information is used to trigger stopping of the terminal location verification.

26. The method according to any one of claims 23 to 25, wherein
the first satellite is a current serving satellite of the terminal; or
the first satellite is a satellite that provides a service for the terminal next time.

27. The method according to any one of claims 23 to 26, wherein the method further comprises:
sending key information of the terminal to the location regulation proxy network element.

28. A communication method, applied to an access network element, wherein the access network element is deployed on a first satellite, and the method comprises:
receiving sixth information from a location regulation proxy network element, wherein the sixth information indicates one of the following: to delete context information of a terminal; the terminal to enter an inactive state; or the terminal to enter an idle state, and the location regulation proxy network element is deployed on the first satellite; and
based on the sixth information, deleting the context information of the terminal, indicating the terminal to enter the inactive state, or indicating the terminal to enter the idle state.

29. The method according to claim 28, wherein the method further comprises:
receiving first information from the terminal, wherein the first information is used to request to register or serve the terminal; and
sending the first information to the location regulation proxy network element.

30. The method according to claim 28 or 29, wherein the method further comprises:
sending ninth information to the location regulation proxy network element, wherein the ninth information indicates a third location of the terminal.

31. A communication method, applied to an access network element, wherein the access network element is deployed on a first satellite, and the method comprises:
receiving first information from a location regulation proxy network element, wherein the first information indicates a location of a terminal, and the location regulation proxy network element is deployed on the first satellite; and
if the terminal is within a service range of a first public land mobile network, sending second information to a first mobility management apparatus based on the first information, wherein the second information indicates a cell identity, and the first mobility management apparatus belongs to the first public land mobile network and currently serves the terminal; or
if the terminal is not within a service range of a first public land mobile network, sending third information to the terminal, wherein the third information indicates that registration or a service of the terminal is rejected, wherein
the first public land mobile network currently serves the terminal.

32. The method according to claim 31, wherein the method further comprises:
receiving fourth information from the terminal, wherein the fourth information carries the location of the terminal; and
sending fifth information to the location regulation proxy network element based on the fourth information, wherein the fifth information indicates the location of the terminal.

33. The method according to claim 31 or 32, wherein the method further comprises:
determining whether the location of the terminal is within the service range of the first public land mobile network; or
receiving sixth information from the location regulation proxy network element, wherein the sixth information indicates that the location of the terminal is within the service range of the first public land mobile network, or is not within the service range of the first public land mobile network.

34. The method according to any one of claims 31 to 33, wherein the method further comprises:
sending seventh information to the terminal, wherein the seventh information indicates that the terminal is not within the service range allowed by the first public land mobile network.

35. The method according to any one of claims 31 to 34, wherein the method further comprises:
sending eighth information to the terminal, wherein the eighth information indicates one of the following:
the terminal to enter an inactive state; or
the terminal to enter an idle state.

36. The method according to any one of claims 31 to 35, wherein
the first satellite is a current serving satellite of the terminal; or
the first satellite is a satellite that provides a service for the terminal next time.

37. The method according to any one of claims 31 to 36, wherein the location of the terminal is a global navigation satellite system GNSS location of the terminal.

38. A communication method, applied to a location regulation proxy network element, wherein the location regulation proxy network element is deployed on a first satellite, and the method comprises:
receiving fifth information from an access network element, wherein the fifth information carries a location of a terminal, and the access network element is deployed on the first satellite;
receiving key information of the terminal from a first mobility management network element;
decrypting the fifth information based on the key information, to obtain the location of the terminal; and
sending first information to the access network element, wherein the first information indicates the location of the terminal.

39. The method according to claim 38, wherein
the first satellite is a current serving satellite of the terminal; or
the first satellite is a satellite that provides a service for the terminal next time.

40. The method according to claim 38 or 39, wherein
the fifth information is carried in a non-access stratum message.

41. The method according to any one of claims 38 to 40, wherein the location of the terminal is a global navigation satellite system GNSS location of the terminal.

42. A communication method, applied to a first mobility management network element, wherein the method comprises:
obtaining key information of a terminal; and
sending the key information of the terminal to a location regulation proxy network element, wherein the location regulation proxy network element is deployed on a first satellite.

43. The method according to claim 42, wherein
the first satellite is a current serving satellite of the terminal; or
the first satellite is a satellite that provides a service for the terminal next time.

44. The method according to claim 42 or 43, wherein the method further comprises:
determining to provide a store-and-forward service for the terminal, and receiving ninth information from the terminal, wherein the ninth information indicates that the terminal supports a store-and-forward function; or
receiving tenth information from a unified data management function, wherein the tenth information indicates that the terminal has subscribed to a store-and-forward service.

45. The method according to any one of claims 42 to 44, wherein the method further comprises:
sending eleventh information to the location regulation proxy network element, wherein the eleventh information is used to trigger the location regulation proxy network element to perform the terminal location verification.

46. A communication method, applied to a terminal, wherein the method comprises:
sending ninth information to a first mobility management network element, wherein the ninth information indicates that the terminal supports a store-and-forward function; and
sending fourth information to an access network element, wherein the fourth information carries a location of the terminal.

47. The method according to claim 46, wherein the method further comprises:
receiving third information from the access network element, wherein the third information indicates that registration or a service of the terminal is rejected.

48. The method according to claim 46 or 47, wherein the method further comprises:
receiving seventh information from the access network element, wherein the seventh information indicates that the terminal is not within a service range allowed by a first public land mobile network.

49. The method according to any one of claims 46 to 48, wherein the method further comprises:
receiving eighth information from the access network element, wherein the eighth information indicates one of the following: the terminal to enter an inactive state; or the terminal to enter an idle state.

50. A communication apparatus, comprising:
a module configured to perform the method according to any one of claims 1 to 7;
a module configured to perform the method according to any one of claims 8 to 10;
a module configured to perform the method according to any one of claims 11 to 22;
a module configured to perform the method according to any one of claims 23 to 27;
a module configured to perform the method according to any one of claims 28 to 30;
a module configured to perform the method according to any one of claims 31 to 37;
a module configured to perform the method according to any one of claims 38 to 41;
a module configured to perform the method according to any one of claims 42 to 45; or
a module configured to perform the method according to any one of claims 46 to 49.

51. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 7, the method according to any one of claims 8 to 10, the method according to any one of claims 11 to 22, the method according to any one of claims 23 to 27, the method according to any one of claims 28 to 30, the method according to any one of claims 31 to 37, the method according to any one of claims 38 to 41, the method according to any one of claims 42 to 45, or the method according to any one of claims 46 to 49 by using a logic circuit or by executing code instructions.

52. A computer program product comprising instructions, wherein when the instructions are run by a communication apparatus, the communication apparatus is enabled to perform the method according to any one of claims 1 to 7, the method according to any one of claims 8 to 10, the method according to any one of claims 11 to 22, the method according to any one of claims 23 to 27, the method according to any one of claims 28 to 30, the method according to any one of claims 31 to 37, the method according to any one of claims 38 to 41, the method according to any one of claims 42 to 45, or the method according to any one of claims 46 to 49.

53. A computer-readable storage medium, wherein the storage medium stores a computer program or instructions, and when the computer program or the instructions are executed by a communication apparatus, the method according to any one of claims 1 to 7, the method according to any one of claims 8 to 10, the method according to any one of claims 11 to 22, the method according to any one of claims 23 to 27, the method according to any one of claims 28 to 30, the method according to any one of claims 31 to 37, the method according to any one of claims 38 to 41, the method according to any one of claims 42 to 45, or the method according to any one of claims 46 to 49 is enabled to be implemented.
